# EUROPEAN PATENT APPLICATION

(11) **EP 4 806 322 A2**
(43) Date of publication of application: **16.09.2026**
(21) Application number: 26187763.3
(22) Date of filing: 03.03.2024
(51) Int. Cl.: A47L 11/24

(54) **AUTONOMOUS OPERATION APPARATUS AND CONTROL METHOD THEREFOR**

(30) Priority: 03.03.2023 CN 202310216833; 06.04.2023 CN 202310368194; 27.04.2023 CN 202310487996; 27.04.2023 CN 202321012712 U; 27.04.2023 CN 202321048974 U; 27.04.2023 CN 202310474018; 27.04.2023 CN 202321048942 U; 27.04.2023 CN 202321046889 U; 27.04.2023 CN 202321018983 U; 27.04.2023 CN 202321012696 U; 27.04.2023 CN 202321029509 U; 27.04.2023 CN 202321042323 U; 27.04.2023 CN 202321048904 U; 29.12.2023 CN 202311864640; 29.12.2023 CN 202323661311 U; 29.12.2023 CN 202311869103; 29.12.2023 CN 202323654610 U
(62) Document number(s) of the earlier application(s) in accordance with Art. 76 EPC: 24766386.7 / 4 677 987
(71) Applicant: Zhejiang Sunseeker Industrial Co., Ltd., Jinhua, Zhejiang 321000 (CN)
(72) Inventor: RAN, Yuanzhong, Jinhua, Zhejiang, 321042 (CN); WANG, Qidong, Jinhua, Zhejiang, 321042 (CN); YANG, Shengli, Jinhua, Zhejiang, 321042 (CN); YAO, Yongzhe, Jinhua, Zhejiang, 321042 (CN)
(74) Representative: Manna, Sara

(57) **Abstract**

An embodiment of the present disclosure discloses an autonomous operation device, including: a vehicle body, a moving mechanism connected to the vehicle body, a control module, and a collision plate assembly, where the collision plate assembly includes: a middle collision plate and a pair of end collision plates hinged to the middle collision plate; one end collision plate, the middle collision plate, and the other end collision plate are connected sequentially in an extension direction of the middle collision plate; the middle collision plate and the pair of end collision plates cooperatively cover at least one end of the vehicle body; each end collision plate is movably connected to the vehicle body; a first inductive piece is provided on each end collision plate; a second inductive piece inductively cooperating with the first inductive piece is provided on the vehicle body; after the middle collision plate is collided, the collision plate assembly moves towards the vehicle body; and when the end collision plate rotates or moves along with the middle collision plate, the first inductive piece on the end collision plate inductively cooperates with a corresponding second inductive piece, and sends a signal to the control module. An embodiment of the present disclosure further discloses a control method for the autonomous operation device.

## Description

### CROSS-REFERENCE TO RELATED APPLICATIONS

The present application claims priority to the following 17 Chinese Patent Applications:
29. Application No. CN2023104879962, entitled "AUTONOMOUS OPERATION DEVICE" and filed on April 27, 2023
30. Application No. CN2023210127126, entitled "AUTONOMOUS OPERATION DEVICE" and filed on April 27, 2023
31. Application No. CN2023210489748, entitled "AUTONOMOUS OPERATION DEVICE" and filed on April 27, 2023
32. Application No. CN2023104740184, entitled "AUTONOMOUS OPERATION DEVICE AND CONTROL METHOD THEREFOR" and filed on April 27, 2023
33. Application No. CN2023210489428, entitled "AUTONOMOUS OPERATION DEVICE" and filed on April 27, 2023
34. Application No. CN2023210468898, entitled "AUTONOMOUS OPERATION DEVICE" and filed on April 27, 2023
35. Application No. CN2023210189832, entitled "AUTONOMOUS OPERATION DEVICE" and filed on April 27, 2023
36. Application No. CN2023210126960, entitled "AUTONOMOUS OPERATION DEVICE" and filed on April 27, 2023
37. Application No. CN202321029509X, entitled "AUTONOMOUS OPERATION DEVICE" and filed on April 27, 2023
38. Application No. CN2023102168330, entitled "AUTONOMOUS OPERATION DEVICE" and filed on March 3, 2023
39. Application No. CN2023210423238, entitled "AUTONOMOUS OPERATION DEVICE" and filed on April 27, 2023
40. Application No. CN2023210489042, entitled "AUTONOMOUS OPERATION DEVICE" and filed on April 27, 2023
41. Application No. CN202310368194X, entitled "AUTONOMOUS OPERATION DEVICE" and filed on April 6, 2023
42. Application No. CN2023118646402, entitled "AUTONOMOUS OPERATION DEVICE" and filed on December 29, 2023
43. Application No. CN2023236613116, entitled "AUTONOMOUS OPERATION DEVICE" and filed on December 29, 2023
44. Application No. CN2023118691037, entitled "AUTONOMOUS OPERATION DEVICE" and filed on December 29, 2023
45. Application No. CN2023236546107, entitled "AUTONOMOUS OPERATION DEVICE" and filed on December 29, 2023

The above applications are incorporated herein by reference in their entireties.

### TECHNICAL FIELD

The present disclosure relates to an autonomous operation device, and in particular, to an autonomous operation device for lawn maintenance and a control method therefor.

### BACKGROUND

The autonomous operation device can automatically move within a preset working area and automatically execute a work task. A lawn mower is a common garden tool. With the continuous development of science and technologies, highly intelligent automatic lawn mowers are more and more common. Automatic lawn mowers free users from complex and miscellaneous labor, and are increasingly popular with users.

An autonomous operation device includes a top lid, a chassis, and a moving mechanism, where the moving mechanism is configured to drive the chassis to move in a direction of a walk path and generally includes wheels, a motor driving the wheels to walk, and the like. The chassis is connected to the moving mechanism and is configured to bear a device to be operated for work, for example, a cutter head used for cutting a lawn, or a motor. The top lid covers a top of the chassis, so that the top lid can not only protect the chassis from being damaged, but also play a role in beautifying.

A head of the autonomous operation device is provided with a sensor that can detect an obstacle ahead and cause a mower to perform a related action, such as backing off or stopping. However, a tail of the autonomous operation device is provided with an auxiliary road and a motor driving the auxiliary road to rotate or advance. As a result, the tail of the autonomous operation device does not have enough space for arrangement of a sensor assembly, and thus an obstacle behind the autonomous operation device cannot be detected. When a rear part of the autonomous operation device encounters an obstacle, if the autonomous operation device cannot perform a related avoidance action in time, the autonomous operation device may be damaged. Based on the foregoing case, it is necessary to develop an autonomous operation device that can detect a rear obstacle in time.

In addition, in the prior art, a top lid and a chassis are movably connected to each other; and a permanent magnet and a Hall sensor are relatively provided on the top lid and the chassis. When the top lid is collided, relative positions of the top lid and the chassis are changed, and the permanent magnet and the Hall sensor cooperate with each other and can sense collision of the top lid. However, in the prior art, only the collision of the top lid can be detected, and an orientation from which the collision comes cannot be detected. Therefore, a movement scheme and a track that are required for avoiding an obstacle cannot be determined by determining a position of the collision.

### SUMMARY

At least one specific embodiment of the present disclosure aims to provide an autonomous operation device, so as to resolve at least one of the foregoing problems.

For this reason, a specific embodiment of the present disclosure provides an autonomous operation device, including: a vehicle body; a moving mechanism, where the moving mechanism is connected to the vehicle body; a control module; and a collision plate assembly, where the collision plate assembly includes: a middle collision plate and a pair of end collision plates hinged to the middle collision plate; one end collision plate, the middle collision plate, and the other end collision plate are connected sequentially in an extension direction of the middle collision plate; the middle collision plate and the pair of end collision plates cooperatively cover at least one end of the vehicle body; each end collision plate is movably connected to the vehicle body; a first inductive piece is provided on each end collision plate; a second inductive piece inductively cooperating with the first inductive piece is provided on the vehicle body; after the middle collision plate is collided, the collision plate assembly moves towards the vehicle body; and when the end collision plate rotates or moves with the middle collision plate, the first inductive piece on the end collision plate inductively cooperates with a corresponding second inductive piece, and sends a signal to the control module.

Benefits brought by specific embodiments of the present disclosure will be presented in DETAILED DESCRIPTION.

### BRIEF DESCRIPTION OF THE DRAWINGS

FIG. 1 is a schematic structural diagram of an autonomous operation device according to an embodiment of the present disclosure;
FIG. 2 is a cross-sectional view of an autonomous operation device according to an embodiment of the present disclosure;
FIG. 3 is a partial enlarged view of A in FIG. 2;
FIG. 4a and FIG. 4b are a three-dimensional view and an exploded view of an autonomous operation device according to an embodiment of the present disclosure;
FIG. 5 is an exploded view of the autonomous operation device and a vision module in the embodiment shown in FIG. 4;
FIG. 6 is a cross-sectional view, taken in a first direction, of a mounting part and the vision module in the embodiment shown in FIG. 5;
FIG. 7a and FIG. 7b are a schematic structural diagram and a schematic exploded view of an autonomous operation device according to an embodiment of the present disclosure;
FIG. 8a, FIG. 8b, FIG. 8c, and FIG. 8d are a schematic diagram of a mounting position of a handle, a schematic diagram of a structure of the handle, a partial enlarged view of a position B, and a cross-sectional view of a position C according to an embodiment of the present disclosure;
FIG. 9a and FIG. 9b are a cross-sectional view of a joint among a top lid, a handle, and a chassis and a cross-sectional view of the top lid according to an embodiment of the present disclosure;
FIG. 10 is a schematic structural diagram of an autonomous operation device according to an embodiment of the present invention;
FIG. 11 is an exploded view of a moving mechanism according to an embodiment of the present disclosure;
FIG. 12 is a schematic structural diagram of a wheel carrier according to an embodiment of the present disclosure;
FIG. 13a and FIG. 13b are a schematic structural diagram of a bottom surface of a lower lid and a partial enlarged view of a position D according to an embodiment of the present disclosure;
FIG. 14a and FIG. 14b are a cross-sectional view of a joint between a vehicle body and a wheel carrier and a partial enlarged view of a position E according to an embodiment of the present disclosure;
FIG. 15a and FIG. 15b are schematic diagrams of a structure in which a wheel carrier is close to a lower part of a vehicle body and a structure in which the wheel carrier is away from the lower part of the vehicle body according to an embodiment of the present disclosure;
FIG. 16 is a schematic diagram of a position of a second inductive piece according to an embodiment of the present disclosure;
FIG. 17 is an exploded view of a chassis and an auxiliary wheel according to an embodiment of the present disclosure;
FIG. 18 is an exploded view of an auxiliary wheel according to an embodiment of the present disclosure;
FIG. 19 is a partial schematic diagram of a wire and a sealing plug according to an embodiment of the present disclosure;
FIG. 20 is a cross-sectional view of an auxiliary wheel according to an embodiment of the present disclosure;
FIG. 21 is a partial cross-sectional view of an autonomous operation device according to an embodiment of the present disclosure;
FIG. 22 is a schematic structural diagram of a collision plate assembly according to an embodiment of the present disclosure;
FIG. 23 is an exploded view of a collision plate assembly according to an embodiment of the present disclosure;
FIG. 24 is a schematic structural diagram of an end collision plate according to an embodiment of the present disclosure;
FIG. 25a, FIG. 25b, and FIG. 25c are schematic structural diagrams of a lower lid, a base, and a lid body according to an embodiment of the present disclosure;
FIG. 26a, FIG. 26b, and FIG. 26c are partial enlarged views of a bottom, a position F, and a position G of a lower lid according to an embodiment of the present disclosure;
FIG. 27 is a schematic structural diagram of a connection apparatus according to an embodiment of the present disclosure;
FIG. 28 is a schematic diagram of a structure in which an end collision plate and a base are connected according to an embodiment of the present disclosure;
FIG. 29 is a schematic structural diagram of an autonomous operation device according to an embodiment of the present disclosure;
FIG. 30 is an exploded view of a moving mechanism, a rotating shaft, a twins torsional spring and a connecting seat according to an embodiment of the present disclosure;
FIG. 31 is a three-dimensional view of a wheel seat, a rotating shaft, a connecting seat, and a twins torsional spring in the embodiment shown in FIG. 30;
FIG. 32a and FIG. 32b are a cross-sectional view of a vehicle body at a first position when an autonomous operation device is in a first direction and a partial enlarged view of a position H according to an embodiment of the present disclosure;
FIG. 33a and FIG. 33b are a cross-sectional view of a vehicle body at a second position when an autonomous operation device is in a first direction and a partial enlarged view of a position I according to an embodiment of the present disclosure;
FIG. 34a to FIG. 34e are cross-sectional views of an autonomous operation device at a first position and a second position in a second direction and a partial enlarged view according to an embodiment of the present disclosure;
FIG. 35 is a schematic structural diagram of an end collision plate according to an embodiment of the present invention;
FIG. 36 is a schematic structural diagram of an end collision plate from another perspective according to an embodiment of the present disclosure;
FIG. 37 is a schematic diagram of a structure in which a power supply electrode plate butts against an electrode assembly according to an embodiment of the present disclosure;
FIG. 38 is an exploded view of an electrode assembly according to an embodiment of the present disclosure;
FIG. 39a and FIG. 39b are an exploded view of an end collision plate and a partial enlarged view of a position K according to an embodiment of the present disclosure;
FIG. 40 is a schematic structural diagram of an autonomous operation device according to an embodiment of the present invention;
FIG. 41 is an exploded view of the autonomous operation device in the embodiment shown in FIG. 40;
FIG. 42a to FIG. 42e are exploded views and three-dimensional views of a moving mechanism, a mounting seat, and a connector of the autonomous operation device in the embodiment shown in FIG. 40;
FIG. 43a is a top view of the autonomous operation device in the embodiment shown in FIG. 40;
FIG. 43b is a cross-sectional view, taken along N-N, of the autonomous operation device shown in FIG. 43a;
FIG. 44a is a cross-sectional view, taken in a second direction, of the autonomous operation device shown in FIG. 40; and
FIG. 44b is a partial enlarged view of a position P in the embodiment shown in FIG. 44a.

### DETAILED DESCRIPTION

To make the objectives, technical solutions, and advantages of the present disclosure clearer, the following further describes embodiments of the present disclosure in detail with reference to the accompanying drawings. However, those of ordinary skill in the art may understand that in various embodiments of the present disclosure, numerous technical details are set forth in order to enable readers to better understand the present disclosure. However, technical solutions claimed by the claims of the present disclosure can also be implemented even without these technical details and the various changes and modifications based on the following embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes but is not limited to".

The embodiments of the present disclosure will be described in detail below with reference to the accompanying drawings, so that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification are not necessarily all refer to the same embodiment. In addition, particular features, structures, or characteristics may be combined in any manner in one or more embodiments.

As used in this specification and the appended claims, the singular forms "a" and "the" include plural references, unless otherwise specified clearly in the context. It should be noted that the term "or" is generally used as a meaning of "and/or", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

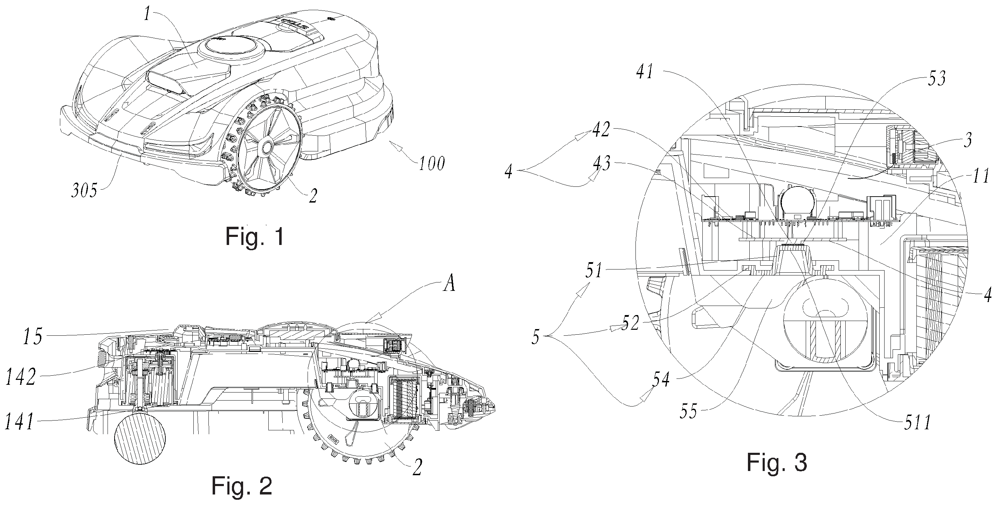

The present disclosure relates to an autonomous operation device 100. As shown in FIG. 1, the autonomous operation device 100 is particularly a robot that can autonomously move in a preset area and perform a specific operation, and is typically an intelligent sweeper or vacuum cleaner performing a cleaning operation, an intelligent lawn mower performing a lawn mowing operation, or the like. The specific operation particularly refers to an operation for processing a work surface and changing a state of the work surface. The present disclosure is described in detail by taking an intelligent lawn mower as an example. The autonomous operation device 100 can autonomously walk on the surface of a working area, and in particular, as an intelligent lawn mower, can autonomously perform a lawn mowing operation on the ground.

In one of the embodiments, as shown in FIG. 1, the autonomous operation device 100 includes a vehicle body 1, a moving mechanism 2, and a connecting part for connecting the moving mechanism 2 to the vehicle body 1, where the vehicle body 1 includes a main body mechanism, a working mechanism, an energy module, a detection module, an interaction module, a control module, and the like.

The main body mechanism generally includes a chassis 10 and a decorative shell. The chassis 10 is configured to mount and accommodate at least one of functional mechanisms and functional modules, such as the moving mechanism 2, the working mechanism, the energy module, the detection module, the interaction module, and the control module. The decorative shell is typically configured to at least partially wrap the chassis 10, and mainly performs a function of enhancing the aesthetics and recognizability of the autonomous operation device. In some embodiments, at least one of the functional mechanisms and functional modules described above is mounted on the decorative shell. In some existing technologies, the decorative shell is configured to be repositionable for translation and/or rotation relative to the chassis 10 under an external force. Combined with a suitable detection module, exemplarily such as a Hall sensor, the decorative shell can further perform a function of sensing events such as collisions and lifting. Specific embodiments of the present disclosure provide a mechanism for detecting collision and lifting events that is different from the above-described prior art and will be described below in detail.

A working mechanism is configured to perform a specific operation task and includes work pieces and a working prime mover that drives the work pieces to run. For example, for an intelligent sweeper/vacuum cleaner, the work pieces include a roller brush, a dust suction pipe, a dust collection chamber, and the like. For an intelligent lawn mower, the work pieces include a cutting blade or a cutting cutterhead, and further include other components for optimizing or adjusting a mowing effect, such as a height adjusting mechanism for adjusting a mowing height. The working prime mover is preferably a motor, and may be, in another embodiment, an internal combustion engine or a machine that uses another type of energy source to generate power. In some other embodiments, the working prime mover and a walking prime mover are configured as a same prime mover.

The energy module is configured to provide energy for various tasks of the autonomous operation device 100. In this embodiment, the energy module includes a battery and a charging connection structure, where the battery is preferably a rechargeable battery; and the charging connection structure is preferably a charging electrode that may be exposed outside the autonomous operation device.

The detection module is configured as at least one sensor that senses an environmental parameter or a working parameter of the autonomous operation device 100. Typically, the detection module may include sensors associated with definition of the working area, for example, various types of sensors such as a magnetic induction sensor, a collision sensor, an ultrasonic sensor, an infrared sensor, a visual sensor, a radio sensor, and the like. The types of the sensors are adapted to positions and a quantity of corresponding signal generating devices. The detection module may further include sensors related to positioning and navigation, such as an RTK-GPS positioning apparatus, a laser positioning apparatus, a visual positioning apparatus, an electronic compass, an acceleration sensor, an odometer, an angle sensor, a geomagnetic sensor, and the like. The detection module may further include sensors related to its own working safety, such as an obstacle sensor, a lifting sensor, a battery pack temperature sensor, and the like. The detection module may further include sensors related to an external environment, such as an ambient temperature sensor, an ambient humidity sensor, a light sensor, a rain sensor, and the like.

The interaction module is configured at least to receive control instruction information inputted by a user, transmit information requiring user perception, and communicate with other systems or devices to transmit and receive information. In this embodiment, the interaction module includes an input apparatus arranged on the autonomous operation device for receiving control instruction information inputted by a user, typically such as a control panel and an emergency stop key. The interaction module further includes a display screen, an indicator light, and/or a buzzer arranged on the autonomous operation device, enabling a user to perceive information through light or sound. In other embodiments, the interaction module includes a communication module arranged on the autonomous operation device and a terminal device independent from the autonomous operation device, such as a mobile phone, a computer, and a network server. User control instruction information or other information may be inputted on the terminal device and reach the autonomous operation device via a wired or wireless communication module.

The control module typically includes at least one processor and at least one non-volatile memory. The memory stores a pre-written computer program or an instruction set, and the processor, according to the computer program or the instruction set, controls the performance of movements, work, and the like of the autonomous operation device 100. Further, the control module can also control and adjust the corresponding actions of the autonomous operation device and modify parameters in the memory according to a signal of the detection module and/or a user control instruction.

The autonomous operation device may also constitute an autonomous operation system with boundaries and a stop station, where the boundaries are configured to define a working area of a robotic system, and typically include an outer boundary and an inner boundary. The autonomous operation device is limited to move and work within the outer boundary, outside the inner boundary, or between the outer boundary and the inner boundary. The boundary may be solid, typically such as a wall, a fence, a railing, or the like. Alternatively, the boundary may be virtual. Typically, in this embodiment, the boundary is constituted by two-dimensional or three-dimensional coordinates in an electronic map. These two-dimensional or three-dimensional coordinates are illustratively obtained by at least one of an RTK-GPS positioning device and a visual positioning device. In some other embodiments, the boundary is a virtual boundary signal generated by a boundary signal generating device; and the virtual boundary signal is typically an electromagnetic signal or an optical signal.

The stop station is usually configured on or in the boundary for the autonomous operation device to park, and is particularly capable of supplying energy to the autonomous operation device parked at the stop station.

In one of the embodiments, as shown in FIG. 1 to FIG. 3, the autonomous operation device 100 includes a vehicle body 1, a moving mechanism 2, a vision module 3, and a circuit board assembly 4. FIG. 2 shows a cross-sectional view of the autonomous operation device 100. FIG. 3 shows a partial enlarged view of a position of the circuit board assembly 4 in FIG. 2. The vehicle body 1 has an accommodating cavity 11. The moving mechanism 2 is connected to the vehicle body 1. The vision module 3 is partially arranged in the accommodating cavity 11. The circuit board assembly 4 is arranged in the accommodating cavity 11. The circuit board assembly 4 is electrically connected to the vision module 3. Specifically, the vehicle body 1 has a heat conducting part 5. The heat conducting part 5 protrudes towards a side where the circuit board assembly 4 is located, and is configured to dissipate heat of the circuit board assembly 4. A side, away from the accommodating cavity 11, of the heat conducting part 5 is partially exposed outside.

In the embodiments of the present disclosure, the vehicle body 1 is an integral piece, and the vehicle body 1 has the heat conducting part 5. However, in the prior art, the vehicle body 1 has a separate design in which an opening is provided and a heat conducting piece is arranged in the opening. Therefore, a process of machining a screw hole in a heat conducting piece in the prior art and a process of connecting the heat conducting part 5 to the vehicle body 1 are omitted. Hence, compared with the prior art, the autonomous operation device 100 in the embodiments of the present disclosure has the following advantages: A machining process is simple; there is no need to use a screw to connect the heat conducting part 5 to the vehicle body 1; and there is no need to punch holes in the vehicle body 1 and the heat conducting part 5, which avoids damage. Therefore, a cost of the screw and a process cost are saved; and a machining cost of the autonomous operation device is also lower.

It should be understood that in this embodiment, the heat conducting part 5 is a structure protruding towards the side where the circuit board assembly 4 is located; but in other embodiments, the heat conducting part 5 may alternatively be a flat plate structure, and the heat conducting part 5 is arranged based on a position of the circuit board assembly 4, so that a side, facing the accommodating cavity 11, of the heat conducting part 5 is in thermal connection with the circuit board assembly 4. In other words, without departing from the scope of the present disclosure, those skilled in the art may perform arrangement according to actual needs.

As shown in FIG. 3, the vehicle body 1 further includes a main body part. The main body part and the heat conducting part 5 are integrally formed via injection molding. An integral injection molding process may be used in actual processing. The heat conducting part 5 is secured in a mold, and softened plastic is injected into a cavity of the mold for curing, so that the main body part and the heat conducting part 5 are connected to form the integral vehicle body 1. Specifically, the heat conducting part 5 has a main body section 51 partially protruding towards the side where the circuit board assembly 4 is located and a fixing section 52 located at a periphery of the main body section 51; and the fixing section 52 is embedded in the main body part. As the fixing section 52 is embedded in the main body part, this structure can ensure that a connection between the heat conducting part 5 and the main body part is relatively stable. It should be understood that although the fixing section 52 is embedded in the main body part in this embodiment, the main body part may be partially embedded in the fixing section 52 in other embodiments, which does not depart from the scope of the present disclosure, either. Those skilled in the art may perform arrangement according to actual needs.

Further, as shown in FIG. 3, the main body section 51 has a contact section 511; the circuit board assembly 4 has an electrode plate 41 electrically connected to the vision module; and the contact section 511 is opposite the electrode plate 41. Because the electrode plate 41 electrically connected to the vision module is used for image processing, and the electrode plate 41 has a relatively high computing speed and a relatively large computing amount, a relatively large amount of heat is generated in a working process. The electrode plate 41 is arranged in the sealed accommodating cavity 11, so that the contact section 511 is opposite the electrode plate 41, to dissipate heat of the electrode plate 41. In this embodiment, the main body section 51 protrudes towards the side where the circuit board assembly 4 is located. In other words, a protruding degree of the main body section 51 may be adjusted based on a position of the electrode plate 41, thereby adapting to the position of the electrode plate 41. However, in the prior art, an electrode plate is first secured on a heat conducting piece, and then the heat conducting piece is secured on the vehicle body 1. This embodiment limits a mounting position of the electrode plate 41. In the embodiments of the present disclosure, a mounting position of the circuit board assembly 4 provided with the electrode plate 41 is relatively flexible; and a protrusion degree of the main body section 51 of the heat conducting part 5 can be adjusted by setting the position of the circuit board assembly 4 provided with the electrode plate 41. Those skilled in the art may perform arrangement according to actual needs.

In addition, as shown in FIG. 3, a side, away from the accommodating cavity 11, of the contact section 511 is exposed outside; and an orthographic projection of the electrode plate 41 is within the contact section 511 in a normal direction of a surface, facing the electrode plate 41, of the contact section 511. In other words, an area of the contact section 511 is at least greater than or equal to an area of the electrode plate 41, and the electrode plate 41 is in complete contact with the contact section 511, so that heat emitted by the electrode plate 41 during work can be conducted out by the contact section 511 as much as possible, and then dissipated with a relatively good heat dissipation effect.

The circuit board assembly 4 includes an electrode mounting plate 42 and a second control plate 43 that are electrically connected to each other. The electrode plate 41 is connected to the second control plate 43. The second control plate 43 provided with the electrode plate 41 electrically connected to the vision module is arranged apart from the electrode mounting plate 42, which is advantageous to cost reduction. This is because if the circuit board assembly 4 is provided with only one circuit board, and not only the electrode plate 41 for processing visual data but also another control circuit is arranged on the circuit board, the entire circuit board needs to use a high-speed circuit board. However, processing of the visual data requires a high-speed circuit board; and a low-speed circuit board can be used as the another control circuit. Therefore, the following setting has a relatively low cost: The electrode plate 41 for processing the visual data is arranged on the second control plate 43; the another control circuit is arranged on the electrode mounting plate 42; a high-speed circuit board is used as the second control plate 43; and a low-speed circuit board is used as the electrode mounting plate 42.

It should be understood that although only two circuit board modules: the electrode mounting plate 42 and the second control plate 43 are provided in this embodiment, the electrode mounting plate 42 and the second control plate 43 are arranged in parallel up and down, and a circuit element requiring heat dissipation is welded onto the second control plate 43, so that heat can be dissipated through the heat conducting part 5. However, in another embodiment, there may be a plurality of electrically connected circuit board modules, for example, three, four, or more than four electrically connected circuit board modules. At least one of the circuit board modules is connected to the electrode plate 41 for processing visual data; and the circuit board module connected to the electrode plate 41 is opposite the heat conducting part 5. In this way, the scope of the present disclosure is not deviated.

In addition, thermally conductive silica gel 53 connecting the contact section 511 to the electrode plate 41 is filled therebetween. Due to arrangement of the thermally conductive silica gel 53, the electrode plate 41 can be in sufficient contact with the contact section 511. Therefore, heat emitted by the electrode plate 41 can be transmitted to the contact section 511 more efficiently, to achieve a better heat dissipation effect.

In addition, as shown in FIG. 3, the heat conducting part 5 further includes a connecting section 54 located at a periphery of the main body section 51; the fixing section 52 extends out from one end of the connecting section 54; and the fixing section 52 is embedded in the main body part and wrapped by the main body part. A side, away from the accommodating cavity 11, of the connecting section 54 is located on the same plane as a side, surrounding a periphery of the connecting section 54, of the main body part. This structure can ensure flatness of an appearance surface of the vehicle body 1.

As shown in FIG. 3, the autonomous operation device 100 further includes a heat dissipation fin 55. The heat dissipation fin 55 is connected to the heat conducting part 5, located outside the accommodating cavity 11, and configured to accelerate heat dissipation of the heat conducting part 5. The heat dissipation fin 55 is of a strip-shaped sheet structure. A length extending direction of the structure is consistent with an advancing direction of the autonomous operation device 100, so that the heat dissipation effect is improved.

Thermal conductivity of the heat conducting part 5 is greater than that of the main body part. The main body part is generally made of a plastic material whose thermal conductivity is very low. The heat conducting part 5 is made of a material having relatively high thermal conductivity. Specifically, thermal conductivity of the heat conducting part 5 is greater than or equal to 80 W/m*K. The heat conducting part 5 is preferably made of a metal material, for example, aluminum or copper. Further, the heat conducting part 5 may be made of a material whose thermal conductivity is 80 W/m*K, 100 W/m*K, 150 W/m*K, 200 W/m*K, or 250 W/m*K.

Specifically, as shown in FIG. 2 and FIG. 3, the vehicle body 1 includes a main body part and a heat conducting part 5 that is integrally formed with the main body part via injection molding. The main body part includes a lower lid 141, an upper lid 142, and a top lid 15. The upper lid 142 covers the lower lid 141 to form the accommodating cavity 11. The top lid 15 is connected to the upper lid 142 and covers at least part of the upper lid 142. It should be understood that in this embodiment, because a battery cell provided on the second control plate 43 is arranged towards the lower lid 141, the heat conducting part 5 is arranged on the lower lid 141. Alternatively, when the battery cell is arranged towards the upper lid 142, the heat conducting part 5 may be arranged on the upper lid 142 based on a position of the battery cell. Alternatively, when the battery core is arranged obliquely, the heat conducting part 5 may be adaptively arranged obliquely. Those skilled in the art may perform arrangement according to actual needs.

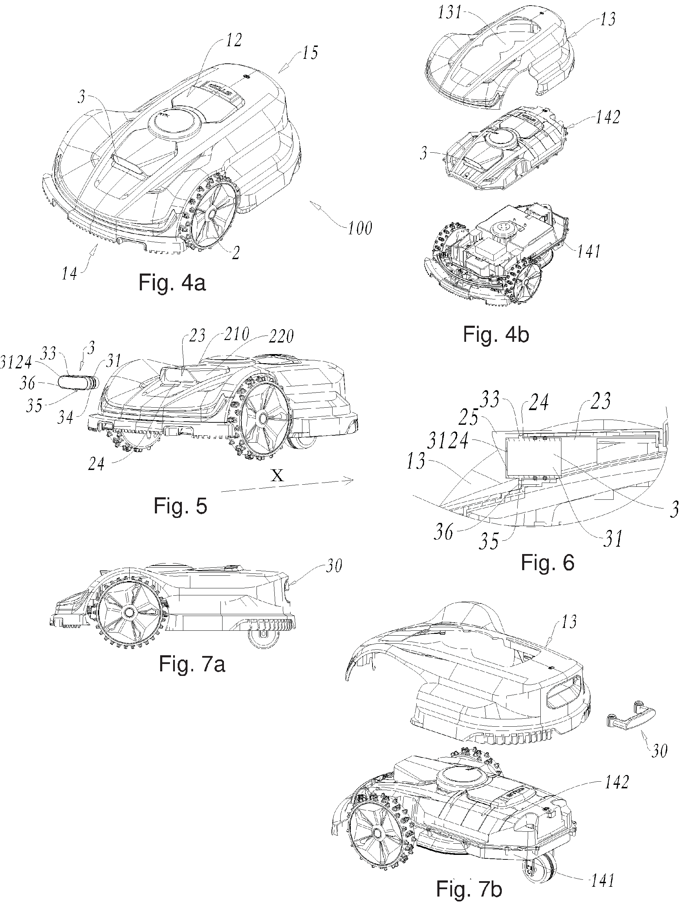

In one of the embodiments, as shown in FIG. 4a and FIG. 4b, the autonomous operation device 100 is configured to advance in a first direction X of a horizontal plane and includes at least a vehicle body 1, a mounting part, and a vision module 3. The vehicle body 1 includes a chassis 10, a top lid 15, a moving mechanism 2, a working mechanism, an energy module, a detection module, an interaction module, a control module, and the like. In the first direction X, the vehicle body 1 has a first end 14 and a second end. The first end 14 is a vehicle head of the vehicle body 1. The second end is a vehicle tail of the vehicle body.

An avoiding hole 131 is formed in a top of the top lid 15. The avoiding hole 131 extends in the first direction X. The mounting part is connected to the top of the top lid 15. The mounting part is close to the first end 14 and is located in the avoiding hole 131. The mounting part extends in the avoiding hole 131 and exceeds the top of the top lid 15. In addition, in the embodiment shown in FIG. 2, an entire shape of the mounting part is similar to a lid body having an irregularly arc-shaped surface and covers to the first end 14 of the top lid 15.

Specifically, as shown in FIG. 4a to FIG. 6, the mounting part includes a top wall 210 and two side walls 220; tops of the two side walls 220 are connected to the top wall 210; bottoms of the two side walls are connected to the top of the top lid 15; and widths of the two side walls 220 gradually increase from the second end to the first end 14. The connecting part and the top lid 15 fit each other to form an inner wall of a mounting groove 23. An opening of the mounting groove 23 faces the first end 14, is used for detachable mounting of the vision module 3, and is also used by the vision module 3 for observing a road condition ahead.

It should be understood that in another embodiment, the mounting part may be set to another shape; the mounting groove 23 may extend in the first direction X from an end surface, away from the second end, of the mounting part, that is, the inner wall of the mounting groove 23 is entirely formed by the mounting part. Certainly, the mounting part may alternatively be provided on the top lid 15 or the chassis 10 directly, and the mounting groove 23 is formed in the mounting part, provided that the mounting part is located at the first end 14 of the vehicle body 1, and the opening of the mounting groove 23 is located outside the top lid 15 and faces the first end 14.

The mounting part of the present disclosure is provided with a mounting groove 23 whose opening faces the first end 14. The opening of the mounting groove 23 can not only be used by the vision module 3 for observing a road condition in front of the autonomous operation device 100, such as positioning, but also be directly used for detachable mounting of the vision module 3. When the vision module 3 needs to be detached, the vision module 3 may be directly taken out from the opening of the mounting groove 23 very conveniently and fast.

In preferred embodiments shown in FIG. 5 and FIG. 6, a limit block 24 is arranged on the inner wall of the mounting groove 23. The limit block 24 is located on an edge of the opening, facing the first end 14, of the mounting groove 23. In the first direction X, the vision module 3 includes a first section 31 and a second section 3124. A shape of the first section 31 fits a shape of the inner wall of the mounting groove 23. The first section is located in the mounting groove 23. The second section 3124 is located outside the mounting groove 23. A limiting protrusion 33 is formed on an outer surface of the second section. The limiting protrusion 33 is aligned with the limit block 24 in a direction of a walk path, and abuts against the limit block 24. The limit block 24 and the limiting protrusion 33 cooperate with each other, allowing the vision module 3 to be positioned and mounted in the mounting groove 23 conveniently.

Both the limit block 24 and the limiting protrusion 33 take the shapes of rings extending around the first direction X, that is, the limit block 24 extends along the edge of the opening of the mounting groove 23; the limiting protrusion 33 extends around an outer surface of vision module 3; and a surface, facing the second end, of the limiting protrusion 33 abuts against the limit block 24. Therefore, the second section 3124 is completely located outside the mounting groove 23; a camera of the vision module 3 is located on an end surface, away from the second end, of the second section 3124; and the second section 3124 is exposed outside the mounting groove 23. This better helps the vision module 3 to observe a road condition in front of the first end 14. It should be understood that in another embodiment, the entire vision module 3 may be completely mounted in the mounting groove 23, and the opening of the mounting groove 23 faces the first end 14, provided that a function of the vision module 3 is not affected.

In one embodiment, a connector 35 is also arranged on an outer surface, away from the vision module 3, of the limiting protrusion 33; the connector 35 takes the shape of an arc-shaped sheet and is close to a bottom; the connector 35 also abuts against the ring-shaped limit block 24; a screw hole 36 is formed in each of the connector 35 and the limit block 24; and the screw hole 36 of the connector 35 and the screw hole of the limit block 24 are formed correspondingly. During mounting, the first section 31 of the vision module 3 is pushed into the mounting groove 23; both the limiting protrusion 33 and the connector 35 abut against the limit block 24; and the connector 35 and the limit block 24 can be detachably connected to each other through a screw. It should be understood that alternatively, the screw hole 36 is directly formed in the limiting protrusion 33, and the limiting protrusion 33 and the limit block 24 are connected by using a screw.

In another embodiment, a clamping groove is formed in an outer surface of the second section 3124 of the vision module 3; a clamping block located in the clamping groove is arranged on the inner wall of the mounting groove 23; and the vision module 3 may be connected to the mounting part in a clamping manner. Alternatively, a clamping block is arranged on the outer surface of the second section 3124 of the vision module 3; a clamping groove accommodating the clamping block is formed in the inner wall of the mounting groove 23; and a manner of clamping the vision module 3 to the inner wall of the mounting groove 23 is not limited.

The vision module 3 is in sealed connection with the inner wall of the mounting groove 23, which can prevent the vision module 3 from shaking in a running process. Specifically, two circular grooves 34 extending around the first direction X are formed on the outer surface of the vision module 3; and the two circular grooves 34 are spaced apart in the first direction X. A sealing ring is mounted in each circular groove 34. The sealing ring is located between the circular groove 34 and the inner wall of the mounting groove 23. The circular groove is in sealed connection with the inner wall of the mounting groove 23 through the sealing ring. It should be understood that the circular groove 34 may alternatively be formed in the inner wall of the mounting groove 23. The sealing ring is mounted in the circular groove 34 in the inner wall of the mounting groove 23. The sealing ring is located between the circular groove 34 and the outer surface of the vision module 3. The vision module 3 is in sealed connection with the inner wall of the mounting groove 23 through the sealing ring. A manner of the sealed connection between the vision module 3 and the inner wall of the mounting groove 23 is not limited. In addition, a single circular groove 34 or a plurality of circular grooves 34 may be formed on the outer surface of the vision module 3. A quantity of the circular grooves 34 is not limited. It should be understood that another sealing piece may also be used to replace the sealing ring. For example, a compressible plastic layer or a silica gel layer is applied to the outer surface of the second section 3124 of the vision module 3; or the plastic layer or silica gel layer is applied to the inner wall of the mounting groove 23. In this way, the vision module 3 may also be in sealed connection with the inner wall of the mounting groove 23.

As shown in FIG. 6, the mounting part further includes an overhang part 25. The overhang part 25 extends away from the top wall 210 from an end surface, close to the first end 14, of the top wall 210 and is located at a top of the second section 3124. The overhang part 25 can play a role in protecting the second section 3124 of the vision module 3. It should be understood that in some embodiments, the overhang part 25 may be used as a separate part and be detachably connected to the top lid through a buckle or in another manner. In the embodiment shown in FIG. 5, the top wall 210 includes at least part of the top wall 210 formed by the top lid 15 and at least part of the top wall 210 formed by the foregoing part; and the side wall 220 includes at least part of the side wall formed by the top lid 15 and at least part of the side wall formed by the foregoing part.

A mounting part is arranged at the first end 14 of the autonomous operation device 100 of the present disclosure. The mounting groove 23 whose opening faces the first end 14 is formed in the mounting part. The vision module 3 can be directly mounted into the mounting groove 23 from the opening of the mounting groove 23 simply and fast. In addition, convenience is brought to detaching and maintenance.

In one of the embodiments, with reference to FIG. 1, FIG. 2, FIG. 7a, and FIG. 7b, the autonomous operation device of the embodiments of the present disclosure includes a chassis 10, a top lid 15, a handle 30, and a moving mechanism 2. The chassis 10 includes an upper lid 142 and a lower lid 141. The upper lid 142 covers the lower lid 141. The top lid 15 is connected to the upper lid 142 and covers at least part of the upper lid 142. As shown in FIG. 3, a mounting hole 201 is formed in the top lid 15. The handle 30 is inserted into the mounting hole 201 and connected to a side, facing the upper lid 142, of the top lid 15. The moving mechanism 2 is connected to the lower lid 141. The moving mechanism 2 can drive the autonomous operation device to walk on the surface of the working area.

In the prior art, a handle and an upper lid are secured together. As a result, after the handle is damaged, maintenance costs are high, and a maintenance operation is complex. However, in the present disclosure, the handle is fixedly arranged on the top lid. Therefore, after the handle is damaged, the handle can be replaced or maintained only by detaching the top lid. Compared with the prior art, the operation is simpler; and damage to the chassis 10 in a detaching process is avoided. In addition, costs of the top lid are lower than those of the chassis 10, so that maintenance costs are relatively low even if the top lid is damaged during detaching of the handle.

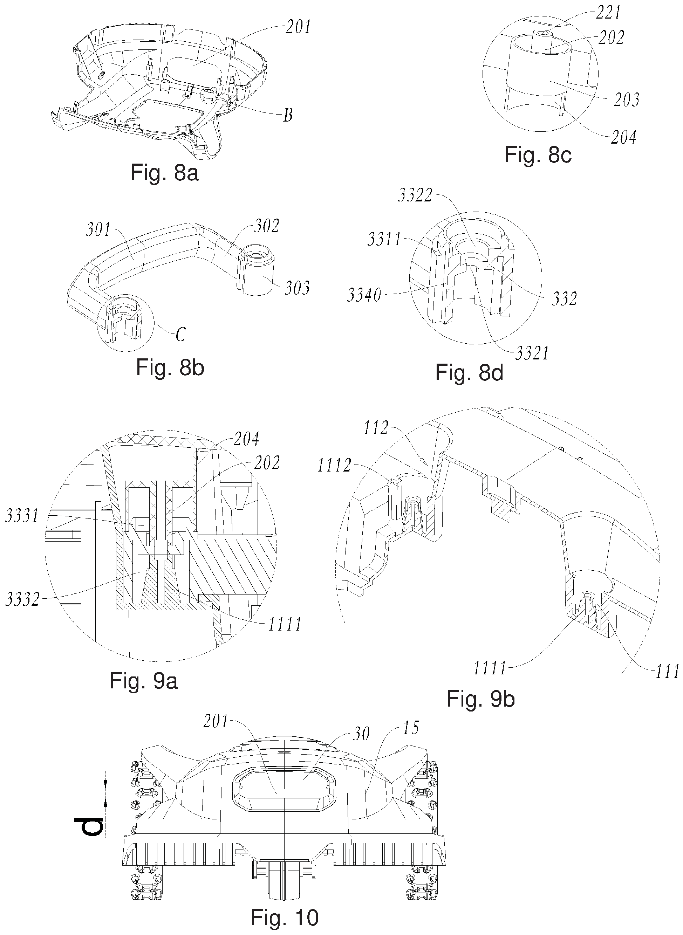

Further, as shown in FIG. 8a to FIG. 8d, the handle 30 has a gripping part 301, a connecting part 302, and a fixing part 303. The connecting part 302 is connected to the gripping part 301. The fixing part 303 is arranged at a free end of the connecting part 302. The fixing part 303 is connected to a side, facing the upper lid 142, of the top lid 15. Specifically, two fixing parts 303 and two connecting parts 302 are provided in this embodiment; and the gripping part 301 is connected to the two connecting parts 302. The arrangement is relatively reasonable. Those skilled in the art may perform arrangement according to actual needs. It should be understood that there may be only one fixing part 303 and one correspondingly arranged connecting part 302; or there may be more than two fixing parts 303. The quantity of connecting parts 302 corresponds to the quantity of the fixing parts 303. Both of the two arrangements do not depart from the scope of the present disclosure.

FIG. 8a to FIG. 8d show a partial enlarged view of a joint between the top lid 15 and the handle 30 and a cross-sectional view of the fixing part 303 of the handle 30. A first mounting post 202 is arranged on a side, facing the upper lid 142, of the top lid 15. A first connecting hole 221 is formed in the first mounting post 202, that is, the first mounting post 202 is a hollow cylinder. A side, facing the top lid 15, of the fixing part 303 is a head. A middle partition plate 332 is arranged in the fixing part 303. The middle partition plate 332 is formed with a through hole 3321 penetrating therethrough. As shown in FIG. 8a to FIG. 8d, the first mounting post 202 is inserted into the head of the fixing part 303; an extension direction of the first connecting hole 221 is the same as an extension direction of the through hole 3321; and the first connecting hole 221 is in communication with the through hole 3321. In an assembling process, the first mounting post 202 is inserted into the head of the fixing part 303; the middle partition plate 332 is connected to the first mounting post 202 by inserting a locking piece into the through hole 3321 and the first connecting hole 221, thereby securing the handle 30 to the top lid 15, where the locking piece may be a screw or another component capable of fulfilling a locking function. In addition, the middle partition plate 332 may alternatively be glued to the first mounting post 202. Although the first mounting post 202 is provided as a hollow cylinder in this embodiment, the present disclosure is not limited to providing the first mounting post as a cylinder.

The first mounting post may alternatively be provided as another cube with an internal hole, which does not depart from the scope of the present disclosure, either.

Further, a positioning wall 203 is circumferentially connected to a periphery of the first mounting post 202; a recessed area 3311 for the positioning wall 203 to be embedded is formed in the head of the fixing part 303; and a shape of the positioning wall 203 fits that of the recessed area 3311. When the first mounting post 202 is inserted into the head of the fixing part 303, positioning and clamping of the positioning wall 203 is realized through the recessed area 3311 formed in the head around the first mounting post, which ensures that the first connecting hole 221 of the first mounting post 202 is aligned with the through hole 3321 of the middle partition plate 332. Those skilled in the art may perform arrangement according to actual needs. As shown in FIG. 8a to FIG. 8d, the first mounting post 202 protrudes from the positioning wall 203. In another embodiment, the first mounting post 202 may not protrude from the positioning wall 203, which does not depart from the scope of the present disclosure, either.

A connecting wall 204 is arranged on a side, facing the upper lid 142, of the top lid 15; the connecting wall 204 is connected to the positioning wall 203; a top of the first mounting post 202 is spaced apart from the top lid 15; and the top of the first mounting post 202 is a side, facing the top lid 15, of the first mounting post 202. Due to the arrangement, when the handle 30 is mounted to the top lid 15, and the first mounting post 202 is secured to the middle partition plate 332 by using a screw or another locking piece, damage to the top lid 15 caused by excessive screwing of the screw is avoided. Those skilled in the art may perform arrangement according to actual needs. It should be understood that the connecting wall 204 may be a wall of a circular ring, or may be a wall shown in FIG. 8a to FIG. 8d and having a notch formed in a side. This arrangement is convenient to produce and manufacture. In addition, although the connecting wall 204 is connected to the positioning wall 203 in this embodiment, the connecting wall 204 may also be connected to the first mounting post 202 in another embodiment, which does not depart from the scope of the present disclosure, either, provided that the top of the first mounting post 202 can be spaced apart from the top lid 15.

In addition, the middle partition plate 332 is partially recessed in a direction away from the head, to form a limiting groove 3322; the first mounting post 202 is partially inserted into the limiting groove 3322 and abuts against a groove bottom of the limiting groove 3322; and the through hole 3321 penetrates the groove bottom of the limiting groove 3322. An inner diameter of the limiting groove 3322 may be slightly greater than an outer diameter of the first mounting post 202. When the first mounting post 202 is inserted into the head of the fixing part 303, the limiting groove 3322 guides and limits the first mounting post 202, so that the first connecting hole 221 of the first mounting post 202 can be aligned with the through hole 3321 in the groove bottom of the limiting groove 3322. Those skilled in the art may perform arrangement according to actual needs.

In addition, as shown in FIG. 9a and FIG. 9b, the fixing part 303 has a hollow cavity inside; the middle partition plate 332 divides the cavity into an upper cavity 3331 and a lower cavity 3332; and the first mounting post 202 is partially inserted into the upper cavity 3331. The arrangement and layout are relatively reasonable.

A receiving cavity 111 is formed in a side, facing the top lid 15, of the upper lid 142. The fixing part 303 is operatively inserted into the receiving cavity 111. A second mounting post 1111 is arranged in the receiving cavity 111. The second mounting post 1111 is operatively inserted into the lower cavity 3332. The arrangement and layout are reasonable. Those skilled in the art may perform arrangement according to actual needs.

The upper lid 142 has a sunken placing part 112 extending towards the lower lid 141. The placing part 112 has a receiving cavity 111 inside. A cavity wall of the receiving cavity 111 abuts against an outer wall of the fixing part 303. A layout of the placing part 112 is a structure in which the upper lid 142 is sunk towards the lower lid 141, so that the structure is compact. In addition, the cavity wall of the receiving cavity 111 abuts against the outer wall of the fixing part 303, that is, the receiving cavity 111 may be clamped to the fixing part 303, so that gravity is mainly borne by the chassis 10 after the autonomous operation device is lifted up, and it is not necessary to separately reinforce the top lid 15.

Further, as shown in FIG. 8a to FIG. 8d and FIG. 9, a protrusion 1112 is formed on the receiving cavity 111 in the extension direction of the through hole 3321; and a guide groove 3340 is formed in the fixing part 303 in the extension direction of the through hole 3321. When the fixing part 303 is inserted into the receiving cavity 111, the protrusion 1112 and the guide groove 3340 cooperate with each other to provide a guide for an insertion direction of the fixing part 303. It should be understood that the protrusion 1112 is not limited to being formed on the receiving cavity 111; the guide groove 3340 is not limited to being arranged on the fixing part 303; and forming the groove in the receiving cavity 111 in the extension direction of the through hole 3321 and forming the protrusion 1112 on the fixing part 303 in the extension direction of the through hole 3321 do not depart from the scope of the present disclosure, either. Those skilled in the art may perform arrangement according to actual needs.

During mounting, the fixing part 303 of the handle 30 penetrates the mounting hole 201, so that the head of the fixing part 303 is aligned with the connecting wall 204; and then, the head of the fixing part 303 is buckled into the connecting wall 204. In this case, the first connecting hole 221 of the first mounting post 202 is aligned with the through hole 3321 of the middle partition plate 332; and the middle partition plate 332 is fixedly connected to the first mounting post 202 by using a screw, that is, the handle 30 is fixedly connected to the top lid 15. Subsequently, the top lid 15 is buckled with the chassis 10. In this case, the fixing part 303 is inserted into the receiving cavity 111 of the upper lid 142; and the protrusion 1112 of the receiving cavity 111 is inserted into the guide groove 3340 of the fixing part 303. As the top lid 15 and the handle 30 are secured by using a screw, the handle 30 is firmly secured onto the top lid 15. After mounting of the handle 30, the connecting wall 204 is clamped to the head, the protrusion 1112 is clamped to the guide groove 3340, a bottom surface of the receiving cavity 111 is detached to a bottom surface of the fixing part 303, and the recessed area 3311 of the head is detached to a lower end surface of the connecting wall 204, so that gravity is mainly borne by the chassis 10 after the autonomous operation device is lifted up, and the top lid 15 does not need to be reinforced separately.

Further, as shown in FIG. 10, a distance d between a lower hole wall of the mounting hole 201 and a lower surface of the handle 30 is greater than or equal to 13 mm, so that after the handle 30 is mounted on the autonomous operation device, a distance between a lower surface of the handle 30 and a lower edge of the mounting hole 201 is large enough for a palm of a person to pass through without clamping stagnation. For example, the distance d between the lower hole wall of the mounting hole 201 and the lower surface of the handle 30 may be set to 13 mm, 15 mm, or 18 mm.

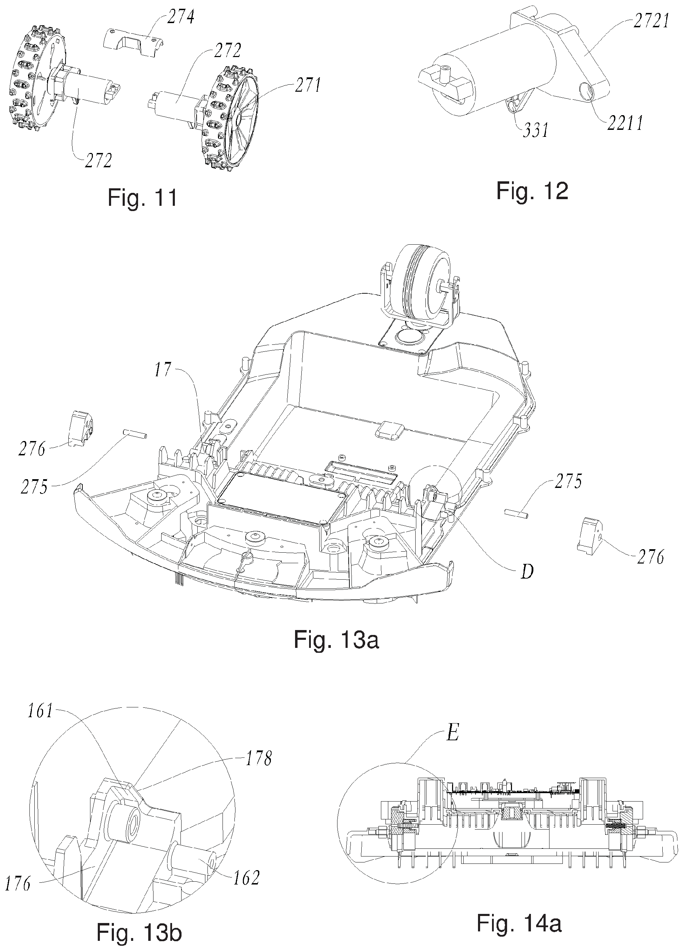

In one of the embodiments, as shown in FIG. 1 and FIG. 11, the autonomous operation device includes a vehicle body 1, a sensor, a moving mechanism 2, and a connecting part for connecting the moving mechanism 2 to the vehicle body 1, where the vehicle body 1 includes a main body mechanism, a working mechanism, an energy module, a detection module, an interaction module, a control module, and the like. The main body mechanism generally includes a chassis 10. The chassis 10 is configured to mount and accommodate at least one of functional mechanisms and functional modules, such as the moving mechanism 2, the working mechanism, the energy module, the detection module, the interaction module, and the control module.

As shown in FIG. 11, the moving mechanism 2 is located below the vehicle body 1 and includes two driving wheels 271, two wheel carriers 272, and two prime movers. The wheel carrier 272 extends in a second direction, where the second direction is parallel to a walk surface and is perpendicular to the first direction. The wheel carrier 272 is hinged to a lower part of the vehicle body 1. A hinge axis of the wheel carrier 272 and the vehicle body 1 extends in the second direction and is non-collinear with an axis of the wheel carrier 272. The wheel carrier 272 operably rotates around the hinge axis with the vehicle body 1 away from or towards the lower part of the vehicle body 1. The prime movers are arranged in the wheel carrier 272. An output shaft of one of the prime movers is connected to one of the driving wheels 271. The wheel carrier 272 is equivalent to a motor base of the prime mover.

During assembling of the autonomous operation device 100 in this embodiment, the moving mechanism 2 is assembled with the vehicle body 1 without using any fastener or connector to connect the moving mechanism 2 to the vehicle body 1. It is designed that the wheel carrier 272 on the moving mechanism 2 is hinged to the vehicle body 1. Because a connection form of connecting the wheel carrier 272 to the vehicle body 1 directly has a lower requirement on an assembly structure than a fastener-based connection form in the prior art, the autonomous operation device 100 in this embodiment is convenient to mount, and an assembly structure in which the wheel carrier 272 is hinged to the vehicle body 1 is simpler and more convenient.

It should be understood that although the moving mechanism 2 includes two driving wheels 271, two wheel carriers 272, and two prime movers in this embodiment, constitution of the moving mechanism 2 is not limited thereto in other embodiments, and there may be one driving wheel 271, three driving wheels 271, or more than three driving wheels 271, one wheel carrier 272, three wheel carriers 272, or more than three wheel carriers 272, and one prime mover, three prime movers, or more than three prime movers, all of which do not depart from the scope of the present disclosure. When one wheel carrier 272 is provided, two driving wheels 271 are connected to the one wheel carrier 272.

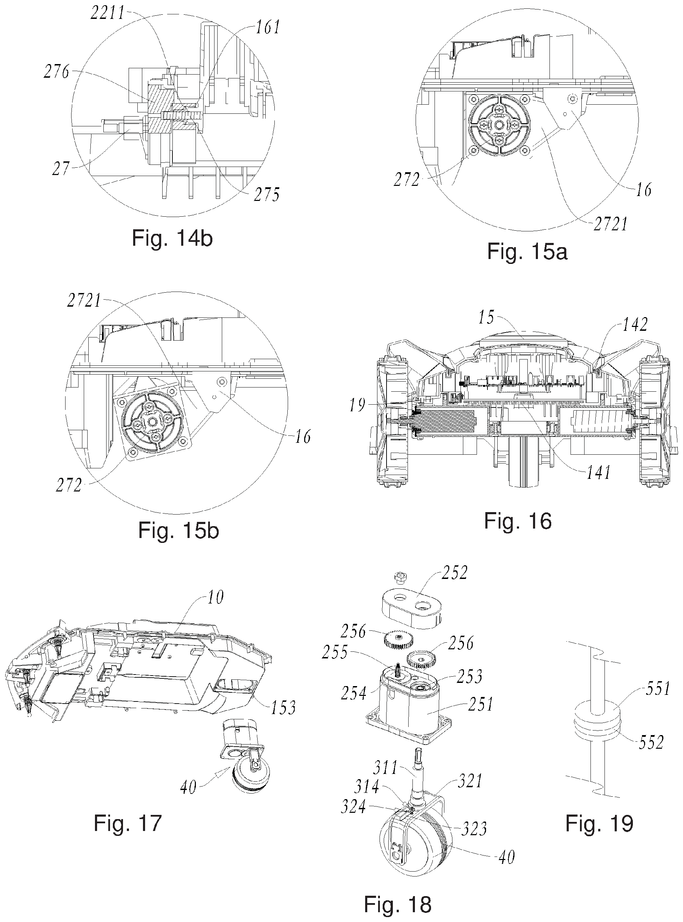

Connecting lugs 2721 are arranged on side walls of the wheel carrier 272. FIG. 13a and FIG. 13b show a schematic structural diagram of a bottom surface of the vehicle body 1 and a partial enlarged view of a joint between the moving mechanism 2 and the vehicle body 1 according to an embodiment of the present disclosure. With reference to FIG. 15a and FIG. 15b, a protruded supporting plate 16 is arranged at the lower part of the vehicle body 1; the connecting lugs 2721 are hinged to the supporting plate 16; a hinge axis of the connecting lug 2721 and the supporting plate 16 extends in the second direction and is non-collinear with the axis of the wheel carrier 272; and the connecting lug 2721 operably rotates around the hinge axis with the supporting plate 16 away from or towards the lower part of the vehicle body 1. As the protruded connecting lugs 2721 are arranged on the side walls of the wheel carrier 272, and the protruded supporting plate 16 is arranged at the lower part of the vehicle body 1, the connecting lug 2721 and the supporting plate 16 can be hinged without reconstructing an original structure of the wheel carrier 272 and the vehicle body 1, and only the following structures are added outside the wheel carrier 272 and the vehicle body 1: the connecting lug 2721 and the supporting plate 16. The structure and the technology are simple. Those skilled in the art may perform arrangement according to actual needs.

Further, as shown in FIG. 15a and FIG. 15b, one connecting lug 2721 is provided on one side of either of the two wheel carriers 272; the connector 274 is connected to the two wheel carriers 272 and is located on sides, away from the connecting lugs 2721, of the wheel carriers 272; and the connector 274 is not connected to the vehicle body 1. The two driving wheels 271 are respectively connected to the sides, away from the connecting lugs 2721, of the wheel carriers 272. In this structure, each wheel carrier 272 may be first inserted into the vehicle body 1 from the outside, so that the connecting lugs 2721 are opposite the supporting plate 16, and the two driving wheels 271 are respectively located on two sides of the vehicle body 1 in the second direction. Subsequently, the supporting plate 16 and the connection plate that are arranged opposite each other are hinged together. Then, the two wheel carriers 272 are connected together by using the connector 274. The structure is reasonable in construction; and structural stability of the autonomous operation device 100 can be ensured.

It should be understood that the moving mechanism 2 of the autonomous operation device 100 may alternatively include only one wheel carrier 272 and two driving wheels 271; two connecting lugs 2721 are respectively arranged on two sides of the wheel carrier 272; two protruded supporting plates 16 are spaced apart at the lower part of the vehicle body 1; and one supporting plate 16 is arranged corresponding to and hinged to one connecting lug 2721. The two driving wheels 271 are respectively connected to the two sides of the wheel carrier 272. In this arrangement, the moving mechanism 2 can be connected to the vehicle body 1 only by inserting the wheel carrier 272 between the two spaced plates and then hinging the supporting plate 16 and the connection plate that are arranged opposite each other.

As shown in FIG. 12, a first connector 2211 is provided on the connecting lug 2721. With reference to FIG. 13a and FIG. 13b, a second connector 161 is provided on the supporting plate 16; the first connector 2211 is clamped to the second connector 161; and the first connector 2211 is sleeved on the second connector 161 and operably rotates around the second connector 161. Specifically, the first connector 2211 is a circular groove formed in the connecting lug 2721; the second connector 161 is a cylindrical protrusion arranged on the supporting plate 16; and the protrusion is inserted into the groove and fits the groove. Therefore, when the wheel carrier 272 rotates around the hinge axis with the vehicle body 1 away from or towards the lower part of the vehicle body 1, the projection and the groove rotate relative to each other. The structure not only is simple in hinge structure, but also provides limitation to a connection between the wheel carrier 272 and the vehicle body 1 due to fitting between the protrusion and the groove, so that relative positions of the wheel carrier 272 and the vehicle body 1 are relatively fixed. Those skilled in the art may perform arrangement according to actual needs. It should be understood that although in this embodiment, the circular groove is formed in the connecting lug 2721, and the cylindrical protrusion is correspondingly provided on the supporting plate 16, in another embodiment, alternatively, the cylindrical protrusion is provided on the connecting lug 2721, and correspondingly, the circular groove is formed in the supporting plate 16, which does not depart from the scope of the present disclosure, either.

Further, FIG. 14a and FIG. 14b show a cross-sectional view of a joint between the vehicle body 1 and the wheel carrier 272 and a partial enlarged view of a joint between the vehicle body 1 and the wheel carrier 272 according to an embodiment of the present disclosure. As shown in FIG. 14a and FIG. 14b, the moving mechanism 2 further includes a pin shaft 275; and the pin shaft 275 penetrates the first connector 2211 and the second connector 161. Those skilled in the art may perform arrangement according to actual needs.

As shown in FIG. 13a, FIG. 13b, and FIG. 14, each supporting plate 16 is provided with an accommodating area 17 on a side away from the other supporting plate 16; and the accommodating area 17 is located at the lower part of the vehicle body 1. The two accommodating areas 17 are located on two side edges of the vehicle body 1 in the width direction; the accommodating area 17 on the left side is open leftwards; and the accommodating area 17 on the right side is open rightwards. The accommodating area 17 accommodates the connecting lug 2721. A side lid 276 is also arranged on a side, away from the second connector 161, of the first connector 2211. The pin shaft 275 penetrates the side lid 276. The accommodating area 17 on the right side is used as an example. During mounting of the wheel carrier 272, the wheel carrier 272 is inserted into the accommodating area 17 from right to left to fit the supporting plate 16; and after the wheel carrier 272 is mounted to the connecting lug 2721, the wheel carrier 272 can extend from the accommodating area 17 in the width direction of the vehicle body 1 without being interfered. Because a connection between the first connector 2211 and the second connector 161 is fitting between a protrusion and a depression, the protrusion needs to extend towards an outer side of the vehicle body 1, and the depression needs to be inserted into a center of the vehicle body 1 from the outer side to fit the protrusion. Therefore, the following structure is relatively reasonable: The accommodating area 17 is arranged on a side, away from one supporting plate 16, of the other supporting plate 16, which facilitates mounting. In addition, the side lid 276 is arranged, so that the pin shaft 275 penetrates the first connector 2211, and two sides of the pin shaft 275 are rotatably connected to the side lid 276 and the second connector 161 respectively. Therefore, stress at a hinged joint is relatively uniform; and the pin shaft 275 is less prone to fall off. Further, the side lid 276 is connected to the vehicle body 1 by using a locking piece 27, so that both ends of the pin shaft 275 are secured to the vehicle body 1, which makes the connection between the wheel carrier 272 and the vehicle body 1 more stable. It should be understood that a screw-nut fitting structure or another locking structure may be selected as the locking piece 27. A stud 162 protrudes and extends from a side, away from one supporting plate 16, of the other supporting plate 16. A screw hole for accommodating the stud 162 to be inserted is formed in the side lid 276. The stud 162 is inserted into the screw hole in the side lid 276, and then the side lid 276 is connected to the stud 162 by using a screw and a nut, so that the side lid 276 is connected to the vehicle body 1.

Further, a limiting plate 178 extending in the second direction is provided at the lower part of the vehicle body 1; and the limiting plate 178 is used to limit a rotation range of the wheel carrier 272. When the wheel carrier 272 is close to the lower part of the vehicle body 1, the connecting lug 2721 is spaced apart from the limiting plate 178. When the wheel carrier 272 moves away from the vehicle body 1 to a preset position, the connecting lug 2721 abuts against the limiting plate 178. Those skilled in the art may perform arrangement according to actual needs.

In addition, the autonomous operation device 100 further includes a control module. As shown in FIG. 12, FIG. 15, and FIG. 16, a first inductive piece 331 is arranged on the wheel carrier 272; and a second inductive piece 19 inductively cooperating with the first inductive piece 331 is arranged on the vehicle body 1. When the wheel carrier 272 operably rotates around the hinge axis with the supporting plate 16 away from or towards the lower part of the vehicle body 1, the first inductive piece 331 inductively cooperates with the second inductive piece 19 and sends a signal to the control module. For example, in this embodiment, the wheel carrier 272 is always located between the vehicle head and the supporting plate 16; the left side of the vehicle body 1 is the vehicle head; and the right side of the vehicle body is the vehicle tail. After the vehicle body 1 is lifted up, the wheel carrier 272 rotates around the hinge axis with the vehicle body 1, and a relatively large distance from the vehicle body 1 is generated, so that the distance between the wheel carrier 272 and the vehicle body 1 is increased, and a change between states in FIG. 15a and FIG. 15b is generated. At the same time, the first inductive piece 331 inductively cooperates with the second inductive piece 19, to send a signal to the control module for determining that the vehicle body 1 is lifted up. In addition, when a rear part of the vehicle body 1 in the first direction is abutted, the driving wheel 271 moves backwards continuously first, so that the vehicle body 1 rotates clockwise around an abutted position, a front part of the vehicle body 1 is lifted up, the wheel carrier 272 rotates under the action of gravity to be separated from the vehicle body 1, and the change between the states in FIG. 15a and FIG. 15b occurs. At the same time, the first inductive piece 331 inductively cooperates with the second inductive piece 19, to send a signal to the control module for determining that there is an obstacle behind the vehicle body 1.

In addition, as shown in FIG. 15a and FIG. 15b, the vehicle body 1 includes a chassis 10 and a top lid 15. The chassis 10 includes a lower lid 141 and an upper lid 142 covering the lower lid 141. The top lid 15 is connected to the upper lid 142 and covers part of the upper lid 142. The moving mechanism 2 is located below the lower lid 141; the wheel carrier 272 is hinged to a lower part of the lower lid 141; a hinge axis of the wheel carrier 272 and the lower lid 141 extends in the second direction and is non-collinear with the axis of the wheel carrier 272; and the wheel carrier 272 operably rotates around the hinge axis with the lower lid 141 away from or towards the lower part of the lower lid 141. The arrangement is relatively reasonable. Those skilled in the art may perform arrangement according to actual needs. It should be understood that the vehicle body 1 is not limited to the foregoing form.

In this embodiment, one wheel carrier 272 fits one driving wheel 271; there are two separable wheel carriers 272; and each wheel carrier 272 is hinged to the vehicle body 1. In other embodiments, one wheel carrier 272 may be configured to cooperate with two driving wheels 271. In this case, the wheel carrier 272 may have a plurality of positions hinged to the vehicle body 1 in hinge axes that are on the same straight line; or the wheel carrier 272 may be configured to have one position hinged to the vehicle body 1.

In one of the embodiments, the autonomous operation device 100 includes a vehicle body 1, a moving mechanism, a seat body, a wheel fork, and a wire. The moving mechanism is a wheel-type moving mechanism and includes at least a driving wheel and a prime mover. The moving mechanism includes two driving wheels and two prime movers that respectively drive the two driving wheels to run. Linear advance of the autonomous operation device 100 is achieved via rotation of the two driving wheels in the same direction at equal speeds; and steering advance of the autonomous operation device is achieved via rotation of the two driving wheels in the same direction at different speeds or rotation in opposite directions. It should be understood that there may be two or more driving wheels according to actual needs, and the specific embodiments of the driving wheels are not limited.

Further, as shown in FIG. 17, the moving mechanism further includes at least one auxiliary wheel 40; the two driving wheels are arranged near a front end of the autonomous operation device 100; and the auxiliary wheel 40 is arranged near a rear end of the autonomous operation device 100.

In the embodiment shown in FIG. 17, the auxiliary wheel 40 is a universal wheel; and the auxiliary wheel 40 is connected to the chassis 10 of the vehicle body 1 through a base and the wheel fork.

Specifically, a bottom surface of the chassis 10 is close to the ground, and is provided with a mounting groove 153. The mounting groove 153 has an accommodating space for accommodating the base. Two openings are formed in a top wall of the mounting groove 153. With reference to FIG. 13a and FIG. 13b, the two openings allow wires to be introduced from the base into the vehicle body 1 conveniently.

The base is located in the mounting groove 153 and includes a base 251 and a lid body 252 located on a top of the base 251, as shown in FIG. 18. The base 251 may be connected to the chassis 10 by using a screw, or may be connected to the chassis 10 in another manner. A specific manner of connecting the base to the chassis 10 is not limited.

The lid body 252 covers a top surface of the base 251 and may be clamped to the base 251. In addition, the base is provided with an accommodating cavity 253. The accommodating cavity 253 extends from a bottom surface of the base 251 to a top surface of the lid body 252 in a vertical direction, that is, the accommodating cavity 253 penetrates the base in the vertical direction. A top opening of the accommodating cavity 253 is aligned with a top wall opening of the mounting groove 153 in the vertical direction.

As shown in FIG. 18 to FIG. 21, the wheel fork includes a fork part and a rotating shaft; the fork part is U-shaped and includes a shoulder 321 and two arms 322; two ends of the shoulder 321 are respectively connected to top ends of the two arms 322; and bottom ends of the two arms 322 are in rollable connection with the auxiliary wheel 40. It should be understood that the wheel fork may also be provided in another shape. A specific shape of the wheel fork is not limited.

The rotating shaft extends in the vertical direction, the bottom end of the rotating shaft is connected to a top surface of the shoulder 321, and its top end extends in the vertical direction. A top and middle of the rotating shaft are located in the accommodating cavity 253 of the base and are rotatably connected to an inner wall of the accommodating cavity 253 through two bearings; the top end of the rotating shaft is close to the top surface of the base; and a bottom of the rotating shaft extends beyond a bottom end of the seat body and is connected to the shoulder 321.

An axially extending shaft cavity 311 is provided in the rotating shaft; and the shaft cavity 311 penetrates the rotating shaft in the vertical direction and has a top opening and a bottom opening, that is, the shaft cavity 311 is a through hole that extends in the vertical direction, which is convenient for providing a passage for the wire.

The auxiliary wheel 40 is in rollable connection with the bottom ends of the two arms 322 of the wheel fork; a driving piece is arranged in the auxiliary wheel; the driving piece is a wheel hub motor; and after being electrified, the wheel hub motor can drive the auxiliary wheel 40 to roll. To electrify the driving piece, one end of the wire may be electrically connected to the driving piece, and the other end thereof may be threaded into the shaft cavity 311 from the bottom opening of the shaft cavity 311, extended into the vehicle body 1 from the top opening of the shaft cavity 311 and the top wall opening of the mounting groove 153, and electrically connected to the control module. In a rotation process of the auxiliary wheel 40, the wire can slightly shake in the shaft cavity 311 without being wound around the auxiliary wheel 40, so that a breaking phenomenon caused when the wire is pulled apart by the auxiliary wheel 40 can be effectively avoided.

In a preferred solution, the shaft cavity 311 includes a first section 3120 and a second section 313 which are in communication with each other from the top to bottom in an axial direction; and both the first section 3120 and the second section 313 take the shapes of cylinders, that is, inner walls of the first section 3120 and the second section 313 are cylindrical. It should be understood that in other embodiments, the inner walls of the first section 3120 and the second section 313 may be other polygonal columns; and specific shapes of the inner walls of the first section 3120 and the second section 313 are not limited.

The first section 3120 is located at the top; and a diameter of the inner wall of the first section 3120 is smaller than a diameter of the inner wall of the second section 313. A sealing plug 551 is further sleeved on the wire. As shown in FIG. 19, the sealing plug 551 may be made of a silica gel or a rubber material, provided that the material has specific elasticity. The sealing plug 551 is located in the second section 313 of the shaft cavity 311 and is in an interference fit with the inner wall of the second section 313. During mounting, one end of the wire is fixedly connected to the wheel hub motor; then, the sealing plug 551 is sleeved on the wire; and finally, the wire is pulled from the top of the shaft cavity 311 after the other end of the wire is threaded from the bottom opening of the shaft cavity 311. In this process, the sealing plug 551 enters the shaft cavity 311; and an outer diameter of the sealing plug 551 is in an interference fit with the inner wall of the second section 313, which can ensure that the sealing plug 551 cannot be pulled out from the first section 3120. In a rotation process of the auxiliary wheel 40, the sealing plug 551 can prevent the wire from shaking in the shaft cavity 311, thereby further reducing a risk of wire breakage.

It should be understood that the sealing plug 551 may also be slightly smaller than an inner diameter of the second section 313 and greater than a diameter of the first section 3120, so that the sealing plug 551 may move slightly within the second section 313 without entering the first section 3120. This may also reduce amplitude of axial movement of the wire, thereby reducing a risk of wire breakage.

In a preferred solution, the outer diameter of the sealing plug 551 is the same as or slightly greater than the diameter of the inner wall of the second section 313, allowing the sealing plug 551 to enter the second section 313 conveniently. A convex ring 552 is arranged on a radial outer surface of the sealing plug 551; the convex ring 552 extends in a circumferential direction of the sealing plug 551; and the convex ring 552 allows the sealing plug 551 to tightly fit the inner wall of the second section 313, thereby enhancing stability of the wire.

A threading hole 323 and a plurality of positioning grooves 324 are also formed in the shoulder 321 of the wheel fork; the threading hole 323 is formed by recessing an outer surface of the wheel fork and is in communication with the shaft cavity 311; and the plurality of positioning grooves 324 are located on two sides of the threading hole 323. The wire may be threaded through the threading hole 323 of the wheel fork to enter the shaft cavity 311; then, the wire is continuously pulled to reach a proper length; and finally, the wire is fixed by threading a binding belt or a buckle through the positioning grooves 324 on the two sides of the threading hole 323, thereby further reducing mobility of the wire.

As shown in FIG. 18, the threading hole 323 is formed by recessing the top surface of the shoulder 321; two positioning grooves 324 are respectively located on two sides of the threading hole 323; and the two positioning grooves 324 penetrate the shoulder 321 in the vertical direction. One end of the wire is connected to the wheel hub motor; the other end of the wire is threaded through the threading hole 323 to enter the shaft cavity 311; and the wire can be fixedly connected to the shoulder 321 by threading the binding belt through the two positioning grooves 324. It should be understood that alternatively, a through hole is formed in the shoulder 321, a threading hole 323 is formed in a bottom surface of the shoulder 321, one end of the wire is connected to the wheel hub motor, and the other end of the wire is threaded through the threading hole 323 to enter the through hole and then enter the axial cavity 311.

In a preferred solution, an avoiding groove 314 is also formed in a bottom surface of the rotating shaft; the avoiding groove 314 extends radially from a radial outer surface of the rotating shaft to the shaft cavity 311; the avoiding groove 314 is arranged opposite the threading hole 323 in the vertical direction; and the avoiding groove 314 above the threading hole 323 can be used for avoiding the wire. In a rotation process, the auxiliary wheel 40 drives the wire to shake slightly; the wire needs to be bent at 90° in the threading hole 323 and at the rotating shaft; and due to arrangement of the avoiding groove 314, a bending amplitude of the wire can be reduced. Therefore, the wire can be prevented from rubbing against the bottom surface of the rotating shaft in a shaking process, thereby reducing a risk of wire breakage.

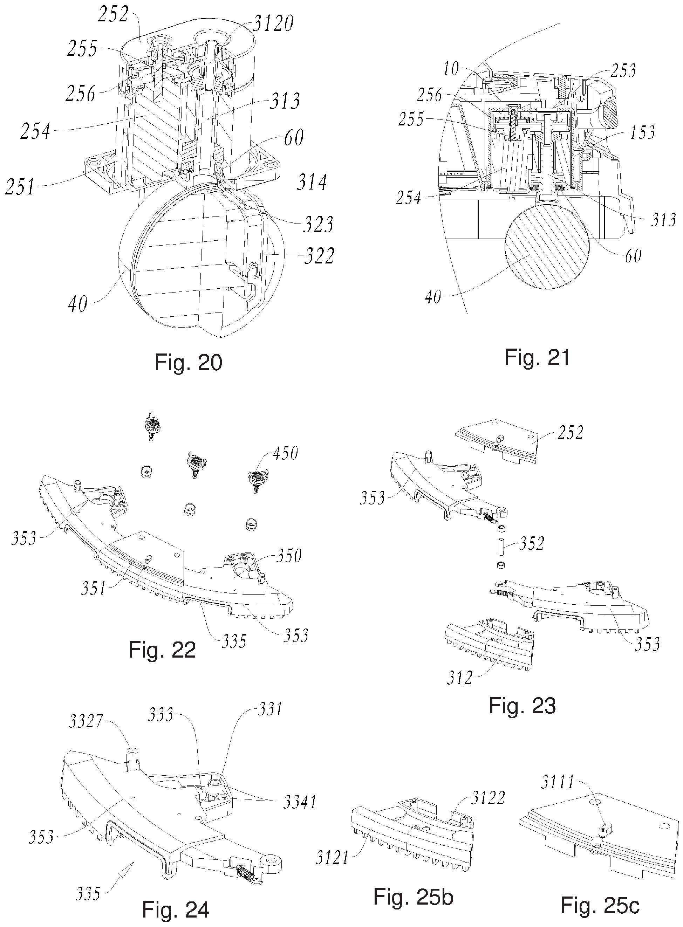

As shown in FIG. 21, a protective pad 60 is also sleeved on a periphery of the rotating shaft; and the protective pad 60 is a felt-type pad, located at a bottom of the accommodating cavity 253, and connected to the inner wall of the accommodating cavity 253, so that foreign matters can be prevented from entering the seat body.

A steering motor 254 is arranged in the base 251; and the steering motor 254 is used for driving the auxiliary wheel 40 to steer. Specifically, an output shaft 255 of the steering motor 254 extends in the vertical direction; and the output shaft 255 drives the rotating shaft to rotate through a transmission mechanism of two gears 256. As shown in FIG. 7a and FIG. 7b, the output shaft 255 is in transmission connection with one of the gears 256 through a spline; the top of the rotating shaft is in transmission connection with the other gear 256 through a spline; and the two gears 256 are meshed with each other. During running of the steering motor 254, the auxiliary wheel 40 is driven to rotate via transmission of the output shaft 255 and the two gears 256.

According to the present disclosure, the wire is mounted in the shaft cavity 311 of the rotating shaft, so that in a rotation process of the auxiliary wheel 40, the wire can be effectively prevented from being wound around the auxiliary wheel 40, thereby reducing a risk of wire breakage.

In one of the embodiments, as shown in FIG. 22, the autonomous operation device includes a vehicle body, a moving mechanism 2, a control module (not shown in the figure), and a collision plate assembly 350. As shown in FIG. 22 and FIG. 23, the collision plate assembly 350 includes a middle collision plate 351, a hinge piece 352 secured to the middle collision plate 351, and a pair of end collision plates 353 hinged to the middle collision plate 351. One end collision plate 353, the middle collision plate 351, and the other end collision plate 353 are sequentially connected in an extension direction of the middle collision plate 351; the middle collision plate 351 and the pair of end collision plates 353 fit one another to surround an end of the vehicle body; and each end collision plate 353 is movably connected to the vehicle body, that is, surrounds part of a side surface of the vehicle body, so that the end collision plate 353 is located between the vehicle body and an obstacle that may be collided in an advancing process. Each end collision plate 353 is provided with a first inductive piece 331; the vehicle body includes a chassis 10 and a top lid 15; the chassis 10 includes a lower lid 115 and an upper lid 142; and the upper lid 142 covers the lower lid 115. The moving mechanism 2 is connected to the lower lid 115; and each end collision plate 353 is movably connected to a bottom of the lower lid 115. A second inductive piece 19 inductively cooperating with the first inductive piece 331 is provided on the lower lid 115. After the middle collision plate 351 is collided, the pair of end collision plates 353 moves along with the middle collision plate 351 towards the vehicle body. When the end collision plate 353 rotates around the hinge piece 352, or the end collision plate 353 is driven by the middle collision plate 351 to move towards the vehicle body, the first inductive piece 331 on the end collision plate 353 inductively cooperates with a corresponding second inductive piece 19, and sends a signal to the control module.

In a walking process of the autonomous operation device, the collision plate assembly 350 is displaced entirely or partially in a horizontal direction after being subject to an external force. Specifically, when the end collision plate 353 located on the left side is pressed by an obstacle and rotates backwards around the hinge piece 352, the first inductive piece 331 on the end collision plate 353 moves backwards relative to the second inductive piece 19 on the chassis 10, and the control module receives a signal and can recognize that the left side of the autonomous operation device collides with the obstacle, so as to execute corresponding strategic avoiding actions (for example, moving backwards-turning rightwards-moving forwards). Similarly, when the end collision plate 353 located on the right side is pressed by an obstacle, the control module can recognize that the right side of the autonomous operation device collides with the obstacle, so as to execute corresponding strategic avoiding actions (for example, moving backwards-turning leftwards-moving forwards). When the middle collision plate 351 is pressed by an obstacle, the middle collision plate 351 drives the two end collision plates 353 located on the left side and the right side to move backwards, that is, the collision plate assembly 350 moves backwards integrally, and the first inductive pieces 331 arranged on the two end collision plates 353 on the left side and the right side move backwards relative to corresponding second inductive pieces 19 approximately at the same time, so that the control module can recognize that a right front side of the autonomous operation device collides with the obstacle, so as to execute corresponding strategic avoiding actions (for example, moving backwards-turning leftwards or rightwards-moving forwards).

In summary, compared with the prior art, the autonomous operation device of the present disclosure can detect, based on a signal transmitted to the control module by a corresponding first inductive piece 331 and second inductive piece 19 after the collision plate assembly 350 is subjected to an external force, a collision from the left side, the right side, or the right front side when the autonomous operation device is collided, and determine a collision position, thereby determining a movement scheme and a track for avoiding the obstacle. In addition, the autonomous operation device of the present disclosure does not need to provide an inductive piece on each component of the collision plate assembly 350. Instead, after one component is collided, the other components are linked, so that collisions from three directions: the left side, the right side, and the middle can be determined only by two inductive pieces arranged on the two end collision plates 353 and the middle collision plate 351. Therefore, a quantity of inductive pieces is reduced, thereby reducing costs.

It should be understood that although in this embodiment, the vehicle body is a structure of the chassis 10 and the top lid 15, and the second inductive piece 19 is arranged on the chassis 10, in another embodiment, the vehicle body may be of another structure, and the second inductive piece 19 is not limited to be arranged on the chassis 10, and may alternatively be arranged on the top lid 15, provided that the second inductive piece 19 is arranged on the vehicle body. The second inductive piece 19 being arranged on the vehicle body and inductively cooperating with the first inductive piece 331 on the collision plate assembly 350 does not depart from the scope of the present disclosure. In addition, the first inductive piece 331 may be a Hall sensor, and the second inductive piece 19 may correspondingly be a permanent magnet; or the first inductive piece 331 may be a permanent magnet, and the second inductive piece 19 may correspondingly be a Hall sensor. The first inductive piece 331 and the second inductive piece 19 described above are merely exemplary illustrations. The first inductive piece 331 and the second inductive piece 19 of the present disclosure are not limited to the permanent magnet and Hall sensor described above, and may alternatively be another sensor, for example, an infrared sensor that can detect displacement of the end collision plate 353, which does not depart from the scope of the present disclosure.

Generally, the collision plate assembly 350 is mounted at a front end of the vehicle body in an advancing direction. However, the collision plate assembly 350 may alternatively be mounted at a rear end of the vehicle body in the advancing direction; or the collision plate assembly 350 may be mounted at each of the front end and the rear end of the vehicle body in the advancing direction.

Although in this embodiment, the hinge piece 352 is fixedly connected to the middle collision plate 351, and the hinge piece 352 herein is a separate component, in another embodiment, the hinge piece 352 may be integrally formed with the middle collision plate 351, or the hinge piece 352 may be integrally formed with the end collision plate 353, all of which do not depart from the scope of the present disclosure.

Further, as shown in FIG. 23, the middle collision plate 351 includes a lid body 252 and a base 312 connected to the lid body 252; and the lid body and the base 312 are arranged opposite each other in an axial direction of the hinge piece 352 and partially wrap hinged joints between the pair of end collision plates 353 and the hinge piece 352. That is, the lid body is arranged on top surfaces of the hinged joints between the pair of end collision plates 353 and the hinge piece 352; the base 312 is arranged on bottom surfaces of the hinged joints between the pair of end collision plates 353 and the hinge piece 352; and the lid body and the base 312 are clamped to each other or may be fixedly connected together in another manner. Due to arrangement of the lid body and the base 312, the pair of end collision plates 353 can only rotate in a plane between the lid body and the base 312. In other words, the pair of end collision plates 353 can only rotate in a rotation plane, but cannot shake up and down in the axial direction of the hinge piece 352.

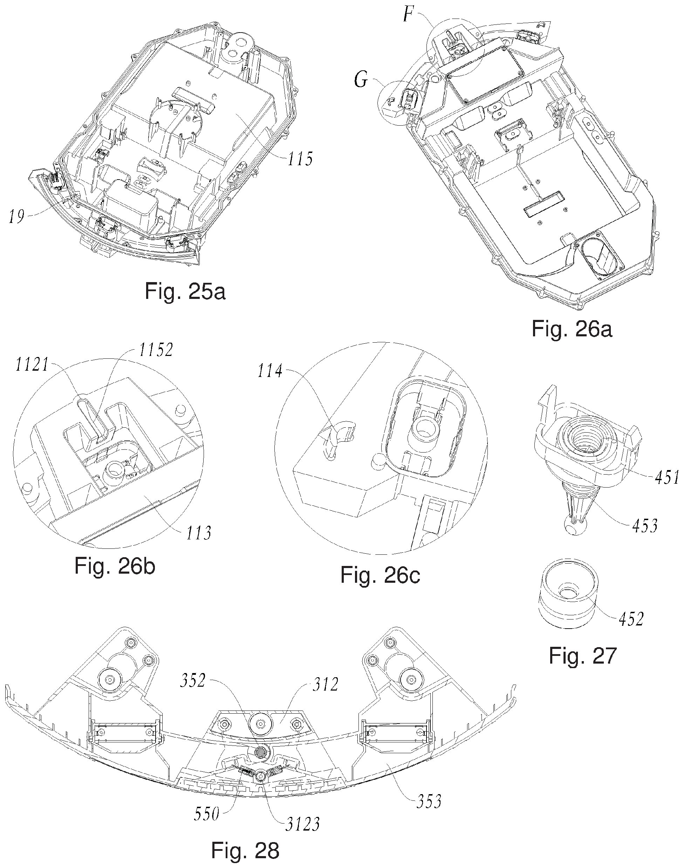

As shown in FIG. 25a to FIG. 25c, the base 312 is provided with a first baffle 3121 and a second baffle 3122; the first baffle 3121 and the second baffle 3122 extend in the extension direction of the middle collision plate 351 and are arranged opposite each other on two sides of a rotation direction of the end collision plate 353; and the hinged joints between the end collision plates 353 and the hinge piece 352 are located between the first baffle 3121 and the second baffle 3122. The first baffle 3121 and the second baffle 3122 are provided to limit a rotation range of the end collision plate 353. Those skilled in the art may perform limitation according to actual needs. It should be understood that although in this embodiment, the first baffle 3121 and the second baffle 3122 are both arranged on the base 312, in another embodiment, both the first baffle 3121 and the second baffle 3122 may be arranged on the lid body 252, or one of the first baffle 3121 and the second baffle 3122 is arranged on the lid body 252, and the other one is arranged on the base 312, all of which do not depart from the scope of the present disclosure.

In addition, as shown in FIG. 25a to FIG. 25c, a first limiting post 3111 is arranged on a top of the lid body 252. FIG. 26a to FIG. 26c show partial enlarged views of positions in the vehicle body that correspond to the middle collision plate 351. A limiting groove 1152 is formed in a bottom of the vehicle body, that is, a bottom of the chassis 10; the limiting groove 1152 extends in a length direction of the vehicle body; the first limiting post 3111 is operatively inserted into the limiting groove 1152; and an end, facing the middle collision plate 351, of the limiting groove 1152 is a closed end 1121. When the first limiting post 3111 operatively moves in an extension direction of the limiting groove 1152, and the middle collision plate 351 is located at an initial position, the first limiting post 3111 abuts against the closed end 1121 of the limiting groove 1152. That is, when the first limiting post 3111 abuts against the closed end 1121 of the limiting groove 1152, the middle collision plate 351 moves forwards in the length direction of the vehicle body to a limit position. In this case, the middle collision plate 351 is located at a foremost position that can be reached; the first limiting post 3111 fits the limiting groove 1152; the middle collision plate 351 is limited to move only in the length direction of the vehicle body; and a foremost position that the middle collision plate 351 can reach is also limited. Although in this embodiment, the first limiting post 3111 is arranged at the top of the lid body 252, and the limiting groove 1152 is formed in the bottom of the lower lid 115, in another embodiment, the first limiting post 3111 may be arranged at the bottom of the lower lid 115, and the limiting groove 1152 may be formed in the top of the lid body 252, which does not depart from the scope of the present disclosure, either.

A third baffle 113 is also arranged at the bottom of the lower lid 115. When the first limiting post 3111 operatively moves towards the vehicle body to an endmost side, the first limiting post 3111 abuts against the third baffle 113. In other words, when the first limiting post 3111 abuts against the third baffle 113, the middle collision plate 351 moves backwards in the length direction of the vehicle body to a limit position. In this case, the middle collision plate 351 is located at a rearmost position to which it can reach. Those skilled in the art may perform arrangement according to actual needs.

In addition, as shown in FIG. 24, a second limiting post 3327 is arranged at a top of the end collision plate 353. FIG. 26a to FIG. 26c show partial enlarged views of positions in the vehicle body that correspond to the end collision plate 353. A third limiting post 114 is arranged at the bottom of the chassis 10. When the end collision plate 353 rotates around the hinge piece 352 away from the vehicle body to a preset position, the second limiting post 3327 abuts against the third limiting post 114. Cooperation of the second limiting post 3327 and the third limiting post 114 limits a limit position for forward rotation of the end collision plate 353. Those skilled in the art may perform arrangement according to actual needs.

As shown in FIG. 27 and FIG. 28, each end collision plate 353 is movably connected to the lower lid 115 through a connection apparatus 450. The connection apparatus 450 includes a first fitting piece 451, a second fitting piece 452, and an elastic piece 453. The first fitting piece 451 is connected to the chassis 10. The second fitting piece 452 is connected to the end collision plate 353. Two ends of the elastic piece 453 are connected to the first fitting piece 451 and the second fitting piece 452, respectively. After the end collision plate 353 is collided, the elastic piece 453 provides the end collision plate 353 with resilience for restoring to the initial position. The collision plate assembly 350 rotates or translates backwards entirely or partially in the horizontal direction after being subject to an external force; and the elastic piece 453 provides resilience, so that the collision plate assembly 350 has a tendency to return to the initial position entirely or partially. After the external force is eliminated, the collision plate assembly 350 returns to the initial position entirely or partially. For example, the left or right end collision plate 353 rotates backwards around the hinge piece 352 after being subject to an external force; and the elastic piece 453 provides resilience, so that the end collision plate 353 has a tendency to return to the initial position. After the external force is eliminated, the end collision plate 353 rotates around the hinge piece 352 and returns to the initial position. After the middle collision plate 351 is subject to an external force, the middle collision plate 351 drives the end collision plates 353 on two sides to move backwards as a whole; and the elastic piece 453 of the connection apparatus 450 connected to the end collision plates 353 on the two sides provides resilience, so that the end collision plates 353 have a tendency to return to the initial position. After the external force is eliminated, the end collision plates 353 on the two sides drive the middle collision plate 351 to return to the initial position together. It should be understood that the middle collision plate 351 may also be movably connected to the lower lid 115 through the connection apparatus 450, so that when the middle collision plate 351 is subject to an external force, the elastic piece 453 of the connection apparatus 450 connected to the middle collision plate 351 also provides resilience for the middle collision plate 351 to return to its original position. The first fitting piece 451 in the connection apparatus 450 may be clamped to the chassis 10. Therefore, in an assembling process, after the vehicle body is assembled first, and the second fitting piece 452 of the connection apparatus 450 is connected to the collision plate assembly 350, the collision plate assembly 350 connected to the connection apparatus 450 may be clamped to the chassis 10 through the first fitting piece 451, thereby mounting the collision plate assembly 350 onto the lower lid 115. This structure can simplify the assembling process. The elastic piece 453 may be a spring or another component having an elastic property.

Further, the end collision plate 353 is provided with a fitting piece mounting position 333; the fitting piece mounting position 333 is configured to mount the second fitting piece 452; the end collision plate 353 is further provided with an inductive piece mounting position 3341; the inductive piece mounting position 3341 is configured to mount the first inductive piece 331; and the inductive piece mounting position 3341 and the second limiting post 3327 are arranged on a peripheral side of the fitting piece mounting position 333. This structure arrangement is relatively reasonable. The first inductive piece 331 is mounted at the inductive piece mounting position 3341 and configured to sense whether the end collision plate 353 is collided or not. The second fitting piece 452 is mounted at the fitting piece mounting position 333, so that the end collision plate 353 is movably connected to the chassis 10. The second limiting post 3327 is configured to limit the limit position for the forward rotation of the end collision plate 353. Therefore, linkage among all the components can be realized better by arranging the fitting piece mounting position 333, the inductive piece mounting position 3341, and the second limiting post 3327 together.

In this embodiment, there are two inductive piece mounting positions 3341 and two first inductive pieces 331; and correspondingly, there are also two second inductive pieces 19 arranged on the chassis 10. When one of the first inductive pieces 331 or one of the second inductive pieces 19 fails, the other first inductive piece 331 or the other second inductive piece 19 may cooperate with a corresponding inductive piece, to determine whether the end collision plate 353 is collided. It should be understood that one, three, or more inductive piece mounting positions 3341, first inductive pieces 331, and second inductive pieces 19 may be provided correspondingly, all of which do not depart from the scope of the present disclosure. Those skilled in the art may perform arrangement according to actual needs.

A hinging position of the end collision plate 353 and the fitting piece mounting position 333 are respectively located on two opposite sides of the end collision plate 353; and the fitting piece mounting position 333 is located on a side, close to the vehicle body, of the end collision plate 353. Because the end collision plate 353 rotates around the hinge piece 352 arranged at the hinge position, an end side of the fitting piece mounting position 333 located at an end, opposite the hinge position, of the end collision plate 353 has a larger rotation amplitude. Therefore, displacement of the end side is relatively obvious, which ensures that an effect of inductive cooperation between the first inductive piece 331 and the second inductive piece 19 is better. Because the fitting piece mounting position 333 is located on a side, close to the vehicle body, of the end collision plate 353, that is, the fitting piece mounting position 333 is located on an inner side of the end collision plate 353, when the end collision plate 353 is subjected to a force, an outer side of the end collision plate 353 is collided first; the outer side of the end collision plate 353 is easy to damage; and the inner side of the end collision plate 353 is not easy to damage. Therefore, this arrangement can avoid damage to a component arranged on the end collision plate 353. Those skilled in the art may perform arrangement according to actual needs.

In addition, the end collision plate 353 is connected to the base 312 through a restoring piece 550. When the end collision plate 353 rotates around the hinge piece 352, the restoring piece 550 provides the end collision plate 353 with a restoring force for restoring to the initial position. Specifically, one end of the restoring piece 550 is connected to the end collision plate 353, and the other end thereof is connected to a spring fixing post 3123 on the base 312, so that resilience is provided for the end collision plate 353, endowing it with a tendency to rotate forwards. That is, the end collision plate 353 rotates backwards around the hinge piece 352 after being collided. In this case, the restoring piece 550 provides the end collision plate 353 with a tendency to rotate forwards, that is, a restoring force for restoring to the initial position. It should be understood that the restoring piece 550 may be a tension spring, a torsion spring, or another component that can provide a restoring force.

In addition, as shown in FIG. 24, a charge opening 335 is formed in the end collision plate 353; and a circuit board assembly electrically connected to the control module is provided in the charge opening 335. As the charge opening 335 is formed in the end collision plate 353, and the circuit board assembly is provided in the charge opening 335 of the end collision plate 353, due to a collision detection function of the end collision plate 353, the circuit board assembly can be in a proper butt joint with a power supply electrode plate 501 during charging-oriented docking. In this figure, the charge opening 335 is formed in either of the two end collision plates 353. However, in another embodiment, the charge opening may be formed in only one end collision plate 353, which does not depart from the scope of the present disclosure, either.

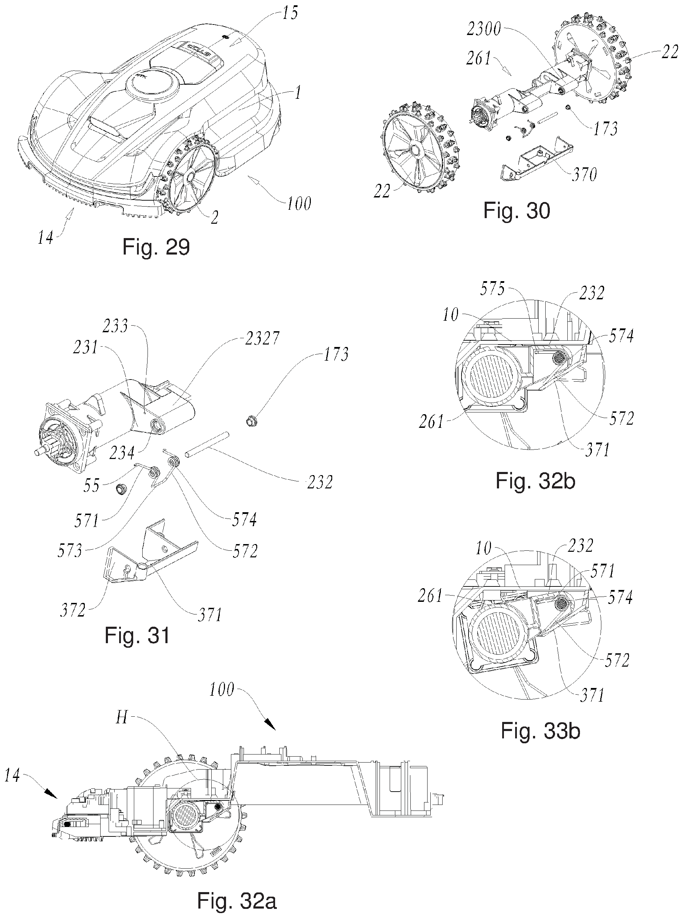

In one of the embodiments, as shown in FIG. 29, the autonomous operation device 100 includes a vehicle body 1, a sensor, a moving mechanism 2, and a connecting part for connecting the moving mechanism 2 to the vehicle body 1, where the vehicle body 1 includes a main body mechanism, a working mechanism, an energy module, a detection module, an interaction module, a control module, and the like. The main body mechanism generally includes a chassis 10. The chassis 10 is configured to mount and accommodate at least one of functional mechanisms and functional modules, such as the moving mechanism 2, the working mechanism, the energy module, the detection module, the interaction module, and the control module.

As shown in FIG. 30 and FIG. 31, the wheel carrier includes a wheel seat 261 and a connecting part 2300 connected to the wheel seat 261; the wheel seat 261 extends in the second direction and is located below the chassis 10; the wheel seat 261 is closer to the first end 14 of the vehicle body 1 than the rotating shaft 232; and the wheel seat 261 and the rotating shaft 232 are spaced apart in the first direction. The wheel seat 261 is capable of accommodating two prime movers. The two prime movers are located at two ends of the wheel seat 261 in the second direction and are arranged symmetrically. The prime mover is preferably a motor, and may be, in another embodiment, an internal combustion engine or a mechanical structure that uses another type of energy source to generate power. In the embodiment shown in FIG. 30, the wheel seat 261 is arranged symmetrically. It should be understood that in another embodiment, the wheel seat 261 may be arranged asymmetrically. A specific shape of the wheel seat 261 is not limited.

Two driving wheels 22 are rotatably connected to output shafts of the two prime movers. The two prime movers may respectively drive the two driving wheels 22 to rotate, thereby driving the vehicle body 1 to advance in the first direction.

One end of the connecting part 2300 is fixedly connected to the wheel seat 261; and the other end thereof extends in the first direction towards the second end of the vehicle body 1, and is rotatably connected to the rotating shaft 232. That is, the rotating shaft 232 is located between the wheel carrier and the second end of the vehicle body 1. The vehicle body 1 is capable of rotating around the rotating shaft 232 between the first position and the second position. Specifically, when the vehicle body 1 runs normally, the vehicle body 1 is at the first position. In this case, the chassis 10 of the vehicle body 1 is located on a top surface of the wheel carrier and runs stably. When the rear part of the vehicle body 1 encounters an obstacle, for example, when the vehicle body 1 moves backwards, the obstacle presses the second end of the vehicle body 1 downwards, so that the first end 14 of the vehicle body 1 is lifted up. In this case, the two driving wheels 22 run on the ground. In a lifting process of the first end 14 of the vehicle body 1, the vehicle body 1 rotates around the rotating shaft 232 to the second position, and the chassis 10 of the vehicle body 1 is far away from the wheel carrier, that is, the chassis 10 of the vehicle body 1 is detached from the wheel carrier.

The sensor may be configured to monitor relative positions of the vehicle body 1 and the connecting part 2300. One part of the sensor may be connected to the vehicle body 1, and the other part thereof may be connected to the wheel seat 261 or the connecting part 2300 in the moving mechanism 2. When the vehicle body 1 travels backwards, if the rear part encounters an obstacle, the second end of the vehicle body 1 is pressed downwards; the first end 14 of the vehicle body 1 can rotate around the rotating shaft 232; and the sensor senses that a relative positional relationship between the vehicle body 1 and the connecting part 2300 changes, thereby causing the autonomous operation device to perform a corresponding task. For example, the autonomous operation device 100 travels forwards to get away from the obstacle and the like, so that the autonomous operation device 100 can be prevented from further traveling towards the obstacle and causing damage to the vehicle body 1.

It should be understood that the rotating shaft 232 may also be fixedly connected to the connecting part 2300, and rotatably connected to the chassis 10 of the vehicle body 1 through a bearing, provided that the connecting part 2300 and the vehicle body 1 can rotate around a horizontal axis relatively between the first position and the second position. It should be understood that the horizontal axis must extend in the second direction. The connecting part 2300 may also be rotatably connected to the vehicle body 1 around the horizontal axis in another manner, for example, a hinging manner or the like, provided that the horizontal axis overlaps with an axis of an axle, that is, the horizontal axis extends in the second direction and is closer to the second end of the vehicle body 1 than the wheel carrier.

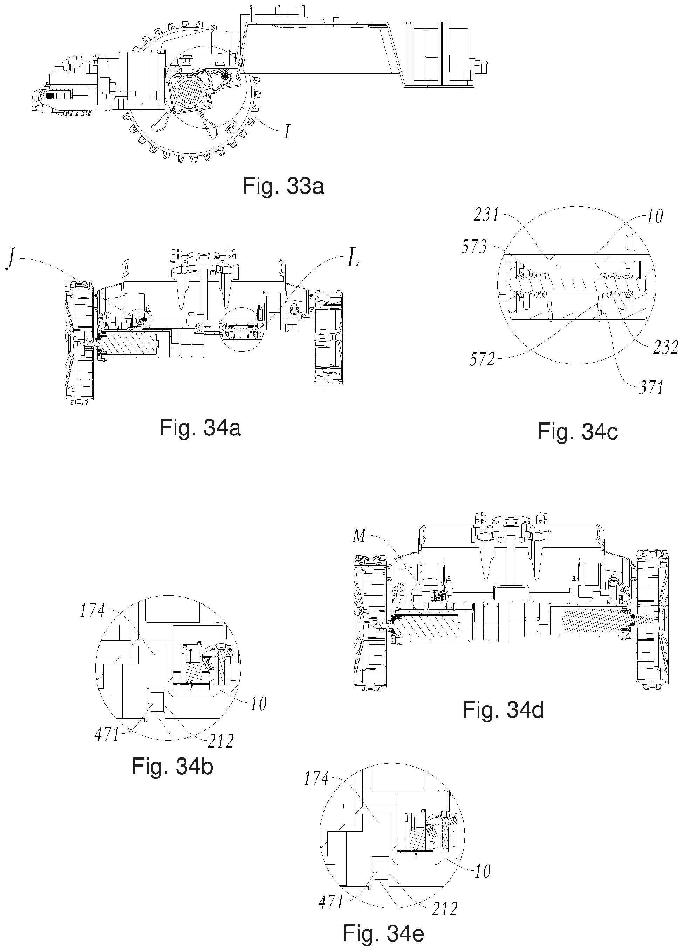

In a preferred solution, the sensor is preferably a Hall sensor. As shown in FIG. 34a to FIG. 34e, the Hall sensor includes a permanent magnet 471 and a magnetic induction element 472; and the permanent magnet 471 and the magnetic induction element 472 may be respectively mounted on the wheel carrier and the vehicle body 1, and configured to sense a relative positional relationship between the vehicle body 1 and the wheel carrier. Specifically, as shown in FIG. 34a to FIG. 34e, an avoiding groove 174 is formed in the chassis 10 of the vehicle body 1; the avoiding groove 174 is formed by recessing a bottom surface of the chassis 10 towards a top thereof; and the magnetic induction element 472 is mounted at a position close to the avoiding groove 174. A top surface of the wheel seat 261 is provided with a mounting part 171. A mounting groove 212 is formed in the mounting part 171. The permanent magnet 471 is mounted in the mounting groove 212. When the vehicle body 1 is at the first position, that is, when the vehicle body 1 runs normally, the mounting part 171 is located in the avoiding groove 174; and the permanent magnet 471 and the magnetic induction element 472 are aligned with each other in the horizontal direction and are spaced apart from each other. When the vehicle body 1 is at the second position, that is, the first end 14 of the vehicle body 1 is lifted up, the mounting part 171 is located below the avoiding groove 174. In this case, the magnetic induction element 472 is located above the permanent magnet 471; and the magnetic induction element 472 and the permanent magnet 471 sense a displacement along with transformation of the vehicle body 1 between the first position and the second position. When a distance between the permanent magnet 471 and the magnetic induction element 472 changes, the magnetic induction element 472 can sense a change of a magnetic field of the permanent magnet 471, so as to determine the relative positional relationship between the vehicle body 1 and the wheel carrier.

It should be understood that alternatively, the permanent magnet 471 is connected to the chassis 10, and the magnetic induction element 472 is connected to the connecting part 2300 or the wheel seat 261. When the vehicle body 1 is at the first position, the permanent magnet 471 and the magnetic induction element 472 are aligned with each other in the horizontal direction and are spaced apart from each other. When the vehicle body 1 is at the second position, the permanent magnet 471 is located above the magnetic induction element 472, and the magnetic induction element 472 can sense a change of the magnetic field of the permanent magnet 471. Further, the sensor may alternatively be a visual position sensor, a laser position sensor, or the like in the prior art. A specific type of the sensor is not limited, provided that the relative positional relationship between the vehicle body 1 and the moving mechanism 2 can be sensed.

In a preferred solution, after the vehicle body 1 is lifted up, a restoring piece may also be arranged on the vehicle body 1, allowing the vehicle body 1 to be restored from the second position to the first position conveniently. In an embodiment, the restoring piece may be two magnets that attract each other. One of the magnets is arranged on the wheel seat 261 or the connecting part 2300, and the other one is arranged on the vehicle body 1. An attractive force between the two magnets can drive the vehicle body 1 to restore.

In a preferred solution, a biasing piece may also be arranged on the connecting part 2300; and the biasing piece may adjust an intensity of movement of the vehicle body 1 towards the wheel carrier. For example, the biasing piece may be a spring; one end of the spring is connected to the vehicle body 1, and the other end thereof is connected to the wheel seat 261 or the connecting part 2300; and the spring has a driving force for driving the vehicle body 1 to move towards the wheel carrier, thereby driving the vehicle body 1 to restore from the second position to the first position.

The biasing piece is a twins torsional spring. A connecting seat 370 is arranged on the chassis 10. The connecting seat 370 may be detachably connected to the chassis 10 through a bolt, which facilitates disassembly and maintenance. Specifically, as shown in FIG. 31, the connecting seat 370 includes a limiting plate 371 and two side walls 372; the limiting plate 371 is located below the chassis 10 and spaced apart from the chassis 10; and a preset angle is formed between the limiting plate 371 and the horizontal direction. The two side walls 372 extend in the vertical direction separately and are spaced apart in the second direction. Top ends of the two side walls 372 are butted against or connected to the chassis 10, and bottom ends thereof are connected to the limiting plate 371 along the two sides of the second direction, respectively. Shaft holes are formed in the two side walls 372, respectively. Two ends of the rotating shaft 232 are located in the shaft holes of the two side walls 372, respectively. Two ends of the rotating shaft 232 are connected to the two side walls 372 through the two shaft holes.

The connecting part 2300 includes two side plates 231 and a top plate 2327. The two side plates 231 separately extend in the vertical direction and are located between the two side walls 372. One end of each of the two side plates 231 is connected to the wheel seat 261; and the other end thereof extends in the first direction towards the second end of the vehicle body 1 and is provided with a shaft hole 234. The two shaft holes 234 are configured to accommodate two ends of the rotating shaft 232; and the rotating shaft 232 is rotatably connected to inner walls of the two shaft holes 234 through two bearings 173, respectively. The top plate 2327 is located between the two side plates 231 and extends in the horizontal direction. One end of the top plate 2327 in the first direction is connected to the wheel seat 261. A middle of the top plate 2327 extends in the horizontal direction. One end, away from the wheel seat 261, of the top plate 2327 is an arc surface bent downwards. The arc surface extends in end surfaces, away from the wheel seat 261, of the two side plates 231. Two sides of the top plate 2327 in the second direction are connected to top surfaces of the two side plates 231, respectively. It should be understood that, in another embodiment, there may be no top plate 2327, and the two side plates 231 are directly connected to the wheel seat 261.

As shown in FIG. 32a and FIG. 32b, when the vehicle body 1 is at the first position, the chassis 10 abuts against the top surfaces of the two side plates 231 or that of the top plate 2327, and the bottom ends of the two side plates 231 are located above the limiting plate 371 and spaced apart from the limiting plate 371. As shown in FIG. 33a and FIG. 33b, when the vehicle body 1 is at the second position, the chassis 10 is away from the top surfaces of the two side plates 231 or that of the top plate 2327, and the bottom ends of the two side plates 231 abut against the top surface of the limiting plate 371. The limiting plate 371 can restrict an angle by which the vehicle body 1 rotates relative to the wheel seat 261.

The twins torsional spring includes two curls 574, two first support arms 571, two second support arms 572, and a third support arm 573, where the two curls 574 are separately wound around the rotating shaft 232 and located between the two side plates 231. One end of each of the two first support arms 571 is connected to an end of a corresponding curl 574, and the other end of the first support arm extends towards the first end 14 of the vehicle body 1 and is connected to a position, close to the wheel seat 261, of a corresponding side plate 231. One end of each of the two second support arms 572 is connected to the other end of a corresponding curl 574, and the other end of the second support arm extends away from the curl 574 and abuts against the limiting plate 371. The third support arm 573 extends in the second direction. Two ends of the third support arm 573 in the second direction are connected to ends, away from the curls 574, of the two second support arms 572, respectively. The third support arm 573 abuts against the limiting plate 371 and has a force for pushing the limiting plate 371 to move away from the top plate 2327. A force of the third support arm 573 for pushing the limiting plate 371 when the vehicle body 1 is at the second position is greater than a force of the third support arm for pushing the limiting plate 371 when the vehicle body 1 is at the first position. The third support arm 573 pushes the limiting plate 371 to move away from the top plate 2327, that is, the limiting plate 371 is enabled to move downwards relative to the rotating shaft 232, allowing the first end 14 of the vehicle body 1 to move downwards, that is, the third support arm 573 drives the first end 14 of the vehicle body 1 via the limiting plate 371 to move towards the connecting part 2300 or the wheel seat 261. The third support arm 573 exerts a greater force on the limiting plate 371 when being at the second position, thereby driving the vehicle body 1 to restore.

As shown in FIG. 31, a connecting hole 233 is formed in a top of each of the two side plates 231. A hook 575 is arranged at an end, away from a corresponding curl 574, of each of the first support arms 571. The hooks 575 of the two first support arms 571 are hung on inner walls of the connecting holes 233 of the two side plates 231, respectively. It should be understood that in another embodiment, alternatively, the first support arms 571 may be connected to the two side plates 231 or the wheel seat 261 in another manner, for example, by welding or the like. A specific manner of connecting the first support arm 571 to the two side plates 231 or the wheel seat 261 is not limited.

In addition, two connecting parts 2300 are arranged on the wheel seat 261; the two connecting parts 2300 are spaced apart in the second direction and are connected to the chassis 10 through two connecting seats 370, respectively; and the two connecting seats 370 are adjacent to each other. It should be understood that greater quantities of connecting parts 2300 and connecting seats 370 may be provided based on a size or weight of the autonomous operation device 100; or only one connecting part 2300 and only one connecting seat 370 are provided; or the connecting part 2300 and the rotating shaft 232 may be directly connected to each other by directly arranging the rotating shaft 232 at the bottom of the chassis 10.

In an alternative solution, the biasing piece is a torsion spring; the torsion spring is located between the two side plates 231 and includes a curl 574 and two support arms; and the curl 574 is wound around the rotating shaft 232 and is located between the two side plates 231. One end of one of the two support arms is connected to one of the side plates 231 or the wheel seat 261; and the other end of the support arm is connected to one end of the curl 574. One end of the other support arm abuts against the limiting plate 371; and the other end of the support arm is connected to the other end of the curl 574. This support arm can push the limiting plate 371 to rotate around the rotating shaft 232 towards the bottom. The limiting plate 371 drives the vehicle body 1 to move close to the connecting part 2300 or the wheel seat 261 towards the bottom. In addition, a force of this support arm for pushing the limiting plate 371 when being at the second position is greater than a force of this support arm for pushing the limiting plate 371 when being at the first position, thereby driving the vehicle body 1 to restore. It should be understood that in order to increase the force for pushing the limiting plate 371, a plurality of torsion springs may alternatively be arranged between the two side plates 231; the plurality of torsion springs are arranged at intervals in the second direction; one support arm of each torsion spring is connected to the side plate 231 or the wheel seat 261; and the other side wall 372 abuts against the limiting plate 371, and has a force for pushing to the limiting plate 371 to move downwards. A specific quantity of torsion springs is not limited herein.

It should be understood that the biasing piece may alternatively be configured to drive the vehicle body 1 to move away from the wheel carrier. For example, a twins torsional spring may be configured to provide a force for driving the vehicle body 1 to move away from the wheel carrier. Specifically, the twins torsional spring is connected to the connecting part 2300, the wheel seat 261, and the rotating shaft 232 substantially in the manner shown in FIG. 31. That is, two curls 574 of the twins torsional spring are also wound around the outside of the rotating shaft 232 and located between the two side plates 231. One end of each of the two first support arms 571 is connected to one end of each of the two curls 574, and the other end of the first support arm is connected to the two side plates 231. One end of each of the two second support arms 572 is connected to the other end of a corresponding curl 574, and the other end of the second support arm extends away from the curl 574 and abuts against the limiting plate 371.

A difference is as follows: The third support arm 573 of the twins torsional spring is fixedly connected to the limiting plate 371. When the vehicle body 1 is at the first position, the first support arm 571 and the third support arm 573 of the twins torsional spring are stretched, and the first support arm 571 and the third support arm 573 have forces for approaching each other. That is, the first support arm 571 and the third support arm 573 may push the limiting plate 371 to approach the top plate 2327, thereby allowing the top plate 2327 to move away from the vehicle body 1. When the vehicle body 1 is at the second position, the twins torsional spring is in a natural state, and the vehicle body 1 can restore depending on its own weight, or restore depending on a restoring piece. Alternatively, a force of the third support arm 573 of the twins torsional spring for pushing the limiting plate 371 when the vehicle body 1 is at the second position may be smaller than a force of the third support arm for pushing the limiting plate 371 when the vehicle body 1 is at the first position.

When the second end of the vehicle body 1 moves downwards under the action of an external obstacle, the twins torsional spring assists the first end 14 of the vehicle body 1 in moving away from the wheel carrier, thereby improving sensitivity of the vehicle body 1 and the wheel carrier.

The present disclosure further relates to an operation method for an autonomous operation device 100, including: using the foregoing autonomous operation device 100, where when the vehicle body 1 is at the second position, the autonomous operation device 100 may recognize a specific event, for example, the autonomous operation device 100 may recognize that it is lifted up or the second end of the vehicle body 1 is collided by an obstacle; and then, executes a predetermined action, for example, an action related to stopping the operation of a cutter head assembly of the autonomous operation device 100, so as to prevent the cutter head assembly from injuring a surrounding worker or device. According to the foregoing technical solution, a same mechanism is used for detecting a collision event of the second end of the autonomous operation device and a lifting event, so that a quantity of collision sensors can be reduced.

In the present disclosure, the sensor is arranged at a position of the vehicle body 1 and the moving mechanism 2; and the sensor is configured to detect a relative positional relationship between the vehicle body 1 and the moving mechanism 2 and determine an obstacle at the second end of the vehicle body 1, so as to operate the autonomous operation device 100 to execute a corresponding work, thereby preventing the vehicle body 1 from being damaged by the obstacle.

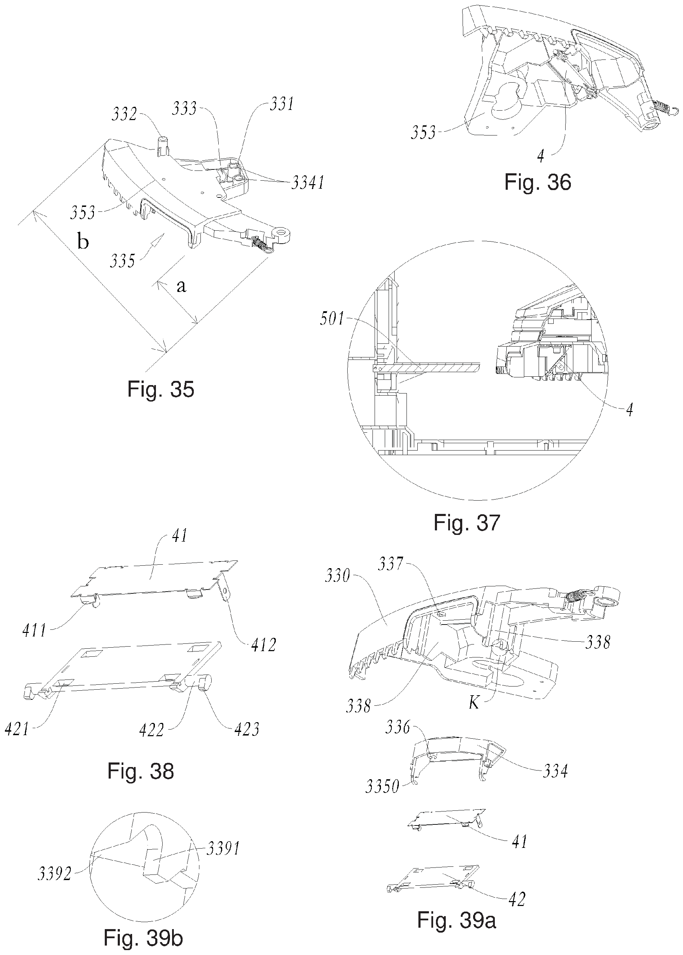

In one of the embodiments, as shown in FIG. 22, the autonomous operation device 100 includes a vehicle body 1, a moving mechanism 2, a control module, and a collision plate assembly 350. The moving mechanism 2 is connected to the vehicle body 1. As shown in FIG. 35 to FIG. 37, the collision plate assembly 350 includes a middle collision plate 351, a hinge piece 352 secured to the middle collision plate 351, and a pair of end collision plates 353 hinged to the middle collision plate 351. One end collision plate 353, the middle collision plate 351, and the other end collision plate 353 are sequentially connected in an extension direction of the middle collision plate 351; the middle collision plate 351 and the pair of end collision plates 353 fit one another to surround an end of the vehicle body 1; and each end collision plate 353 is movably connected to the vehicle body 1, that is, surrounds part of a side surface of the vehicle body 1, so that the end collision plate 353 is located between the vehicle body 1 and an obstacle that may be collided in an advancing process. A first inductive piece 331 is arranged on the end collision plate 353. A second inductive piece 19 inductively cooperating with the first inductive piece 331 is provided on the vehicle body 1. After the middle collision plate 351 is collided, the pair of end collision plates 353 moves along with the middle collision plate 351 towards the vehicle body 1. When the end collision plate 353 rotates around the hinge piece 352, or the end collision plate 353 is driven by the middle collision plate 351 to move towards the vehicle body 1, the first inductive piece 331 on the end collision plate 353 inductively cooperates with a corresponding second inductive piece 19, and sends a signal to the control module. A charge opening 335 is formed in the end collision plate 353. A circuit board assembly 4 electrically connected to the control module is provided in the charge opening 335. The circuit board assembly 4 is connected to the end collision plate 353.

In a walking process of the autonomous operation device, the collision plate assembly 350 is displaced entirely or partially in a horizontal direction after being subject to an external force. Specifically, when the end collision plate 353 located on the left side is pressed by an obstacle and rotates backwards around the hinge piece 352, the first inductive piece 331 on the end collision plate 353 moves backwards relative to the second inductive piece 19 on the chassis 10, and the control module receives a signal and can recognize that the left side of the autonomous operation device collides with the obstacle, so as to execute corresponding strategic avoiding actions (for example, moving backwards-turning rightwards-moving forwards). Similarly, when the end collision plate 353 located on the right side is pressed by an obstacle, the control module can recognize that the right side of the autonomous operation device collides with the obstacle, so as to execute corresponding strategic avoiding actions (for example, moving backwards-turning leftwards-moving forwards). When the middle collision plate 351 is pressed by an obstacle, the middle collision plate 351 drives the two end collision plates 353 located on the left side and the right side to move backwards, that is, the collision plate assembly 350 moves backwards integrally, and the first inductive pieces 331 arranged on the two end collision plates 353 on the left side and the right side move backwards relative to corresponding second inductive pieces 19 approximately at the same time, so that the control module can recognize that a right front side of the autonomous operation device collides with the obstacle, so as to execute corresponding strategic avoiding actions (for example, moving backwards-turning leftwards or rightwards-moving forwards).

When the autonomous operation device moves towards the stop station in a charging-oriented docking process, the autonomous operation device continues to advance after the power supply electrode plate 501 gets in contact with the circuit board assembly 4, so that the collision plate assembly 350 moves backwards, so as to transmit a signal to the control module. The autonomous operation device determines, based on the signal, an occasion for stopping movement. Specifically, in a returning process of the autonomous operation device, a collision emergency response mechanism is in an activated state, that is, if it is detected that the collision plate assembly 350 moves, the autonomous operation device selects an appropriate strategic avoiding action based on a collision direction, and then continues to move towards the stop station. After detecting that the autonomous operation device has reached the vicinity of the stop station, the strategic avoiding action is no longer taken in response to movement of the collision plate assembly 350. The autonomous operation device continues to advance; the power supply electrode plate 501 first gets in contact with the circuit board assembly 4; and then, the autonomous operation device detects a charging voltage signal. The autonomous operation device continues to advance; and when movement of the collision plate assembly 350 is detected again, the autonomous operation device is controlled to stop advancing based on the detected charging voltage signal and a signal indicating the movement of the collision plate assembly 350. According to this solution, accuracy of a charging-oriented electrical connection can be ensured.

Compared with the prior art, in the autonomous operation device according to this embodiment of the present disclosure, the charge opening 335 is formed in the collision plate assembly 350; and the circuit board assembly 4 is arranged in the charge opening 335 and connected to the collision plate assembly 350. As shown in FIG. 7a and FIG. 7b, when the autonomous operation device returns for charging, after the circuit board assembly 4 gets in contact with the power supply electrode plate 501, and a power supply loop is formed, the moving mechanism 2 continues to move, so that contact between the circuit board assembly 4 and the power supply electrode plate 501 is more stable. The circuit board assembly 4 is arranged in the charge opening 335 of the collision plate assembly 350. When the autonomous operation device moves in the moving mechanism 2, collision with the collision plate assembly 350 may be triggered. Then, the first inductive piece 331 on the collision plate assembly 350 inductively cooperates with the second inductive piece 19 on the vehicle body 1, and transmits a signal to the control module, so that the control module may receive the signal to determine that a motor assembly is in contact with the power supply electrode plate 501 and that a power supply loop is formed. Subsequently, the moving mechanism 2 is controlled to stop moving. Due to the design, accuracy of contact between the electrode plate 41 and the circuit board assembly 4 is high. After the circuit board assembly 4 is damaged, only the collision plate assembly 350 needs to be replaced or the circuit board assembly 4 in the collision plate assembly 350 needs to be replaced, instead of disassembling the vehicle body 1. Therefore, maintenance difficulty and maintenance costs are relatively low.

It should be understood that the first inductive piece 331 may be a Hall sensor, and the second inductive piece 19 may correspondingly be a permanent magnet; or the first inductive piece 331 may be a permanent magnet, and the second inductive piece 19 may correspondingly be a Hall sensor. The first inductive piece 331 and the second inductive piece 19 described above are merely exemplary illustrations. The first inductive piece 331 and the second inductive piece 19 of the present disclosure are not limited to the permanent magnet and Hall sensor described above, and may alternatively be another sensor, for example, an infrared sensor that can detect displacement of the end collision plate 353, which does not depart from the scope of the present disclosure.

Generally, the collision plate assembly 350 is mounted at the front end of the vehicle body 1 in an advancing direction. However, the collision plate assembly 350 may alternatively be mounted at the rear end of the vehicle body 1 in the advancing direction; or the collision plate assembly 350 may be mounted at each of the front end and the rear end of the vehicle body 1 in the advancing direction.

Although in this embodiment, the hinge piece 352 is fixedly connected to the middle collision plate 351, and the hinge piece 352 herein is a separate component, in another embodiment, the hinge piece 352 may be integrally formed with the middle collision plate 351, or the hinge piece 352 may be integrally formed with the end collision plate 353, all of which do not depart from the scope of the present disclosure.

The collision plate assembly 350 of the present application is not limited to the above-mentioned form that includes a middle collision plate 351 and a pair of end collision plates 353 hinged to the middle collision plate 351, provided that the collision plate assembly 350 is movably connected to the vehicle body 1. A first inductive piece 331 is arranged on the collision plate assembly 350. A second inductive piece 19 inductively cooperating with the first inductive piece 331 is provided on the vehicle body 1. A charge opening 335 is formed in the collision plate assembly 350. A circuit board assembly arranged in the charge opening 335 and electrically connected to the control module is connected to the collision plate assembly 350. That is, the collision plate assembly 350 may be an integrally formed entire component or may be a plurality of connected components, both of which do not depart from the scope of the present disclosure.

A charge opening 335 is formed in each of the pair of end collision plates 353. The charge opening 335 is located on a side, away from an end of the vehicle body 1, of the end collision plate 353. As the charge openings 335 are symmetrically formed in the pair of end collision plates 353, the circuit board assembly 4 can be in a better butt joint with the power supply electrode plate 501. In another embodiment, the charge opening 335 may be formed in only the left end collision plate 353, or the charge opening 335 may be formed in only the right end collision plate 353, both of which do not depart from the scope of the present disclosure. Those skilled in the art may perform arrangement according to actual needs.

Further, as shown in FIG. 35 to FIG. 37, in an extension direction of the end collision plate 353, a ratio of a distance a between the charge opening 335 and the hinge piece 352 to a length b of the end collision plate 353 ranges from 1/4 to 2/3. For example, the ratio of the distance a between the charge opening 335 and the hinge piece 352 to the length b of the end collision plate 353 may be set to 1/4, 1/3, or 2/3. That is, the charge opening 335 is formed in a middle position of the end collision plate 353 in the extension direction, rather than at an end of the end collision plate 353 in the extension direction. After the end collision plate 353 is assembled, the charge opening 335 and the circuit board assembly 4 arranged therein are not easy to collide, thereby avoiding damage. Those skilled in the art may perform arrangement according to actual needs.

In addition, the circuit board assembly 4 is movably connected to the end collision plate 353 through a restoring piece (not shown in the figure). When the circuit board assembly 4 moves operatively, the restoring piece provides a restoring force for the circuit board assembly 4 to restore to its initial position. One end of the restoring piece is connected to the circuit board assembly 4, and the other end thereof is connected to the end collision plate 353, so that a restoring force is provided for the circuit board assembly 4 to return to the initial position. Because the circuit board assembly 4 is movably connected to the end collision plate 353, when the circuit board assembly 4 gets in contact with the power supply electrode plate 501, the circuit board assembly 4 has a specific moving space, which prevents damage to the circuit board assembly 4 caused when the vehicle body 1 excessively collides with the power supply electrode plate 501. The restoring piece may be a torsion spring, a spring, or another component having an elastic property, all of which do not depart from the scope of the present disclosure, provided that a restoring force can be provided for the circuit board assembly 4 to restore to its initial position.

As shown in FIG. 38, FIG. 39a, and FIG. 39b, the circuit board assembly 4 includes an electrode plate 41 and an electrode mounting plate 42 onto which the electrode plate 41 is secured; the electrode mounting plate 42 is connected to the end collision plate 353 through a restoring piece; and the electrode mounting plate 42 is located on a side of a direction in which the electrode plate 41 moves from the initial position to a position at which the charge opening 335 is opened. The electrode plate 41 is configured to get in contact with the power supply electrode plate 501 to form a power supply loop. The electrode mounting plate 42 provides functions of supporting and fixing the electrode plate 41.

The electrode plate 41 is clamped to the electrode mounting plate 42. Specifically, a fixing leg 411 of the electrode plate 41 fits a fixing hole 421 of the electrode mounting plate 42, so that the electrode plate 41 is fixedly mounted on an upper surface of the electrode mounting plate 42. The electrode plate 41 is further provided with a pair of pins 412 for electrically connecting to the control module of the autonomous operation device. A structure in which the electrode plate 41 and the electrode mounting plate 42 are clamped is not limited to the structure shown in the figures, provided that the electrode plate 41 is enabled to be clamped to the electrode mounting plate 42 and the mounting of the electrode plate 41 and the electrode mounting plate 42 is enabled to be convenient. Those skilled in the art may perform arrangement according to actual needs.

In addition, the electrode mounting plate 42 is hinged to the end collision plate 353; and the restoring piece is located between the electrode mounting plate 42 and the end collision plate 353. The electrode mounting plate 42 is hinged to the end collision plate 353, so that the electrode mounting plate 42 rotates around a hinged joint with the end collision plate 353. When the power supply electrode plate 501 is inserted into the charge opening 335 and is in contact with the electrode plate 41, the charge opening 335 is opened by rotating the electrode mounting plate 42 around the hinged joint with the end collision plate 353. After the power supply electrode plate 501 protrudes out from the charge opening 335, the electrode mounting plate 42 returns to the initial position by rotating around the hinged joint with the end collision plate 353 under the action of the restoring piece.

The end collision plate 353 includes a collision plate main body 330 and an electrode holder 334 connected to the collision plate main body 330. The electrode mounting plate 42 is hinged to the electrode holder 334. The restoring piece is located between the electrode mounting plate 42 and the electrode holder 334. Rotating shafts 232 are arranged at two ends of the electrode mounting plate 42. The electrode holder 334 is provided with corresponding shaft accommodating hooks 3350. The shaft accommodating hooks 3350 on the electrode holder 334 are hooked on the rotating shafts 232 of the electrode mounting plate 42. Due to cooperation of the shaft accommodating hooks 3350 and the rotating shafts 232, the electrode mounting plate 42 can rotate around the rotating shafts 232 relative to the electrode holder 334. As the restoring piece, for example, a torsion spring, is arranged at the rotating shaft 232, the electrode mounting plate 42 has a tendency to rotate forwards. A first screw hole 336 is formed in the electrode holder 334. A second screw hole 337 is formed in the collision plate main body 330. The first screw hole 336 and the second screw hole 337 are arranged opposite each other. The electrode holder 334 and the collision plate main body 330 are fixedly connected through a screw. In the foregoing mounting process, the electrode plate 41 may be secured on the electrode mounting plate 42 first. Then, the electrode holder 334 and the electrode mounting plate 42 are assembled together. Subsequently, the electrode holder 334 and the collision plate main body 330 are fixed together by arranging a screw in the first screw hole 336 and the second screw hole 337, so that assembly is completed. The foregoing mounting process is relatively simple and convenient. Those skilled in the art may perform arrangement according to actual needs. It should be understood that a form of hinging the electrode holder 334 with the electrode mounting plate 42 is not limited to the above structure. Alternatively, hinge holes may be formed in a plate body, extending towards a bottom, of the electrode holder 334. Hinge shafts are arranged at extending positions on two sides of the electrode mounting plate 42. The hinge shafts are inserted into the hinge holes; and hinging between the electrode holder 334 and the electrode mounting plate 42 may also be realized. Those skilled in the art may perform arrangement according to actual needs.

Further, the electrode plate 41 is located between the electrode holder 334 and the electrode mounting plate 42; and both the electrode plate 41 and the electrode mounting plate 42 rotate around the hinged joint between the electrode mounting plate 42 and the electrode holder 334 towards or away from a bottom of the vehicle body 1. When the power supply electrode plate 501 is inserted into the charge opening 335 and is in contact with the electrode plate 41, both the electrode plate 41 and the electrode mounting plate 42 rotate around the hinged joint between the electrode mounting plate 42 and the electrode holder 334 towards the bottom of the vehicle body 1. Meanwhile, the restoring piece provides a force for the electrode mounting plate 42 to rotate away from the bottom of the vehicle body 1, so that the electrode plate 41 and the electrode mounting plate 42 tend to restore to initial positions. After the power supply electrode plate 501 protrudes out from the charge opening 335, the electrode mounting plate 42 rotates around the hinged joint between the electrode mounting plate 42 and the electrode holder 334 away from the bottom of the vehicle body 1 under the action of the restoring piece. The structure and layout are reasonable.

In addition, the end collision plate 353 includes a pair of extending baffles 338 extending towards the bottom of the autonomous operation device. The pair of extending baffles 338 are arranged opposite each other in the extension direction of the end collision plate 353 and located on two sides of the charge opening 335. The electrode plate 41 is operatively located between the pair of extending baffles 338. A limiting groove 339 is formed in the extension baffle 338. The limiting groove 339 has a first limiting wall 3391 and a second limiting wall 3392 that form a preset angle. A limit block 423 is arranged on the electrode mounting plate 42. When the electrode mounting plate 42 is located at the initial position, the limit block 423 abuts against the first limiting wall 3391. When the electrode mounting plate 42 rotates to the preset position, the limit block 423 abuts against the second limiting wall 3392. The limiting groove 339 fits the limit block 423 and is configured to limit a rotation range of the electrode mounting plate 42. Those skilled in the art may perform arrangement according to actual needs.

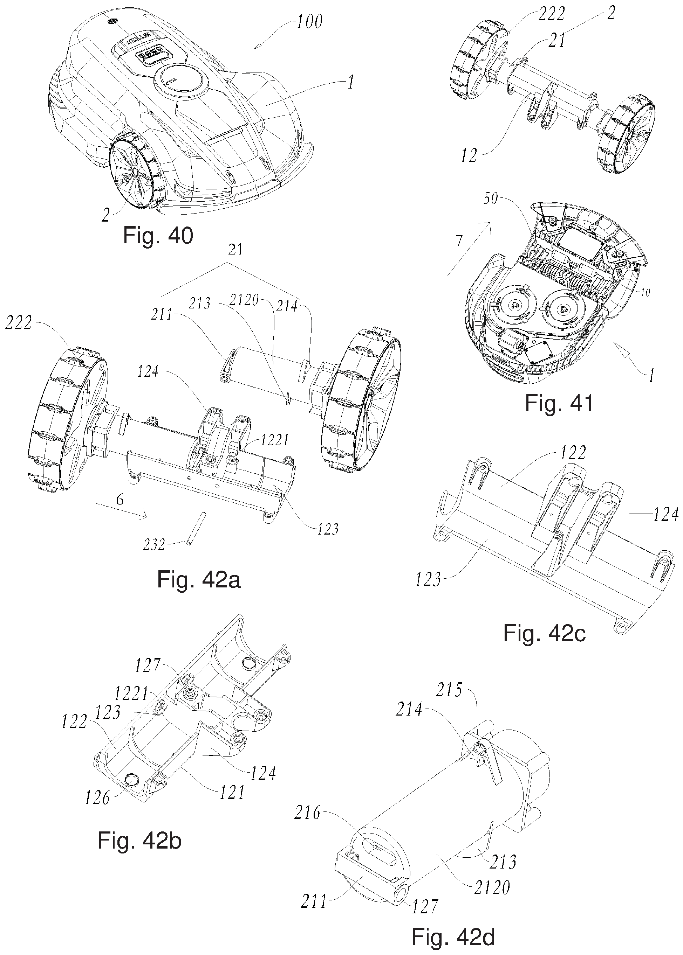

In one of the embodiments, the present disclosure relates to an autonomous operation device 100. As shown in FIG. 40 to FIG. 41, the autonomous operation device 100 is particularly a robot that can autonomously move in a preset area and perform a specific operation, and is typically an intelligent sweeper or vacuum cleaner performing a cleaning operation, an intelligent lawn mower performing a lawn mowing operation, or the like. The specific operation particularly refers to an operation for processing a work surface and changing a state of the work surface. The present disclosure is described in detail by taking an intelligent lawn mower as an example. The autonomous operation device 100 can autonomously walk on the surface of a working area, and in particular, as an intelligent lawn mower, can autonomously perform a lawn mowing operation on the ground.

The autonomous operation device 100 includes a vehicle body 1, a front obstacle sensor, a cutter head assembly, a front wheel assembly, and a rear wheel assembly. The vehicle body 1 has a front end and a rear end in its advancing direction. The front end is an ahead end when the vehicle body 1 walks normally. The front obstacle sensor includes a vision sensor, a collision sensor arranged on a front side of a machine body, and the like. The front obstacle sensor is configured to detect obstacles in front of the vehicle body 1. The vision sensor is configured to collect image information in front of the machine body.

In the embodiment shown in FIG. 41, the cutter head assembly has an opening facing a front end of the vehicle body 1; and a cutter head has a downward flange.

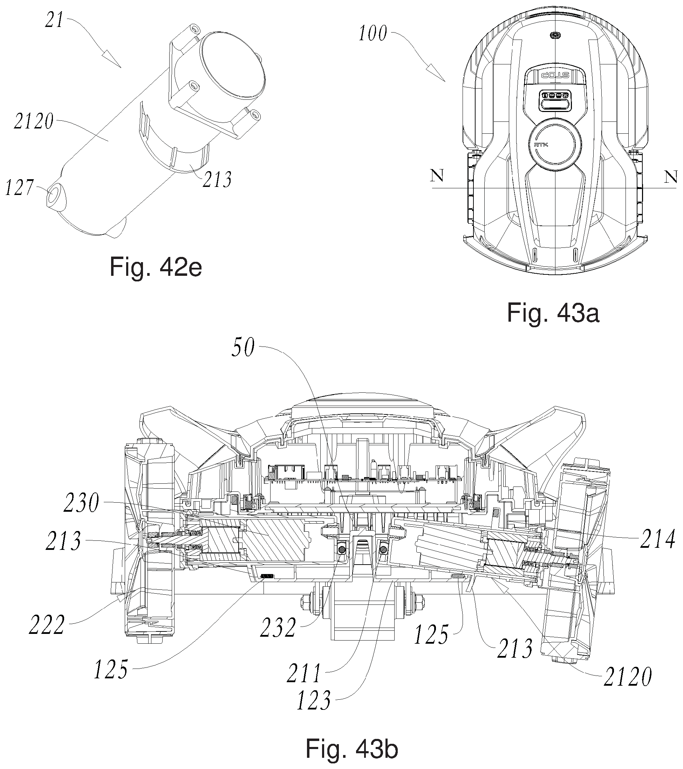

In addition, in the embodiment shown in FIG. 42a to FIG. 42e, the front wheel assembly is located at the front end of the vehicle body and includes a pair of moving mechanisms 2; each moving mechanism 2 includes a wheel 222, as well as a driving piece 230 and a reduction gearbox that drive the wheel 222; and the driving piece 230 is generally a motor or an internal combustion engine. In this embodiment, the driving piece 230 is a motor; one motor drives one wheel 222 to rotate; linear walking is achieved via rotation in the same direction at equal speeds; and steering is achieved via rotation in the same direction at different speeds or rotation in opposite directions. The rear wheel assembly is located close to the rear end of the vehicle body 1 and includes one wheel hub motor and one steering motor. The wheel hub motor controls a rear wheel to rotate around a horizontal axis. The steering motor controls the rear wheel to rotate around a vertical axis. In another embodiment, the rear wheel assembly may include one or two universal wheels. In another embodiment, positions of the front wheel assembly and the rear wheel assembly may be exchanged.

The vehicle body 1 includes a main body mechanism, a working mechanism, an energy module, a detection module, an interaction module, a control module, and the like. The main body mechanism generally includes a chassis 10. As shown in FIG. 41, the chassis 10 is configured to mount and accommodate at least one of functional mechanisms and functional modules, such as the front wheel assembly, the rear wheel assembly, the working mechanism, the energy module, the detection module, the interaction module, and the control module.

A working mechanism is configured to perform a specific operation task and includes work pieces and a working prime mover that drives the work pieces to run. The energy module is configured to provide energy for various tasks of the autonomous operation device 100. The detection module is configured as at least one sensor that senses an environmental parameter or a working parameter of the autonomous operation device 100. The interaction module is configured at least to receive control instruction information inputted by a user, transmit information requiring user perception, and communicate with other systems or devices to transmit and receive information. The control module typically includes at least one processor and at least one non-volatile memory. The memory stores a pre-written computer program or an instruction set, and the processor, according to the computer program or the instruction set, controls the performance of movements, work, and the like of the autonomous operation device 100.

Linear advance of the autonomous operation device 100 is achieved via rotation of the two wheels 222 in the same direction at equal speeds; and steering advance of the autonomous operation device is achieved via rotation of wheels 222 on left and right in the same direction at different speeds or rotation in opposite directions.

Specifically, each moving mechanism 2 further includes a connector 21 configured to mount the driving piece 230; the connector 21 extends in the first direction 6; an inner end of the connector 21 in the first direction 6 is rotatably connected to the chassis 10; an outer end of the connector 21 is close to two side edges of the vehicle body 1 in the first direction 6; and the wheel 222 is connected to the driving piece 230 and located at the outer end of the connector 21.

A rotation axis at a position where the connector 21 and the chassis 10 are connected is parallel to or overlaps with the second direction 7, that is, the connector 21 may also rotate relative to the vehicle body 1 around an axis extending in the second direction 7. The first direction 6 is parallel to or overlaps with a rotation axis of the wheel 222. The second direction 7 is the advancing direction of the vehicle body 1 and is perpendicular to the first direction 6.

Specifically, the connector 21 can rotate between the first position and the second position relative to the vehicle body 1 around the axis parallel to the second direction 7. At the first position, the vehicle body 1 runs normally; and an entire top of the connector 21 of the moving mechanism 2 abuts against the chassis 10, that is, an outer end of the connector 21 in the first direction 6 abuts against the chassis 10. At the second position, the outer end of the connector 21 in the first direction 6 moves downwards away from the chassis 10, that is, the outer end of the connector 21 has a lower height at the second position than at the first position.

In a preferred solution, the connector 21 is connected to the chassis 10 through a mounting seat 12; the mounting seat 12 is connected to the chassis 10; and after the connector 21 is mounted to the mounting seat 12, the mounting seat 12 can be connected to the chassis 10 through a screw. In the embodiment shown in FIG. 42a to FIG. 42e, the mounting seat 12 includes a seat body 121 and a connector 124 that extend in the first direction 6. The seat body 121 is a U-shaped housing having an accommodating space and opened towards the top. The seat body 121 is connected to the chassis 10 through a screw. The connector 124 is connected to a middle position of the seat body 121 in the first direction 6 and is located on a side of the seat body 121 in the second direction 7. The connector 124 is also connected to the chassis 10 through a screw and is configured to enhance connection strength between the mounting seat 12 and the chassis 10. It should be understood that in another embodiment, there may be no connector 124; and more screws may be configured to directly connect the seat body 121 to the chassis 10.

The seat body 121 includes two connection plates 122 and a limiting plate 123 that extend in the first direction 6. As shown in FIG. 42a to FIG. 42e, the two connection plates 122 are arranged opposite each other in the second direction 7; the limiting plate 123 is connected to bottom ends of the two connection plates 122; and the limiting plate 123 and the two connection plates 122 fit each other to form an accommodating space opened towards the top.

The two moving mechanisms 2 are symmetrically arranged relative to a central axis of the vehicle body 1 in the second direction 7; and the two connectors 21 of the two moving mechanisms 2 are symmetrically arranged between the two limiting plates 123 located in the seat body 121, that is, within the accommodating space of the seat body 121. The inner end of each connector 21 is rotatably connected to the two limiting plates 123 through a rotating shaft 232. An axis of the rotating shaft 232 is parallel to or overlaps with the second direction 7. The outer end of each connector 21 extends outside the seat body 121 to an exterior of the vehicle body 1 and is close to an edge of the vehicle body 1 in the first direction 6.

The moving mechanism 2 can rotate between the first position and the second position relative to the vehicle body 1 through the rotating shaft 232. At the first position, a top of the connector 21 at least partially abuts against the bottom surface of the chassis 10; and both the outer end and the inner end of the connector 21 are spaced apart from the limiting plate 123. At the second position, the outer end of the connector 21 is away from the chassis 10; and the connector 21 is located at a position between the inner end and the outer end and abuts against an outer end of the limiting plate 123 in the first direction 6, that is, the limiting plate 123 can limit a range of downward movement of the connector 21 relative to the vehicle body 1, and the chassis 10 can limit a range of upward movement of the connector 21 relative to the vehicle body 1.

In the embodiment shown in FIG. 41, both the two moving mechanisms 2 are rotatable relative to the vehicle body 1. It should be understood that in some other embodiments, one of the two moving mechanisms 2 may be rotatable relative to the vehicle body 1, and the other one may be fixedly connected to the vehicle body 1. That is, only one moving mechanism 2 rotates relative to the vehicle body 1, which can also implement the technical effect of the present disclosure.

It should be understood that the connector 21 may also be rotatably connected to the seat body 121 via a spherical hinge or in another manner, provided that a requirement of rotating the connector 21 around the axis in the first direction 6 can be met. The present disclosure is not limited to a specific manner of rotatably connecting the connector 21 to the seat body 121.

In a preferred solution, the connector 21 specifically includes a connecting part 211, a hood body 2120, and a baffle 213, where the connecting part 211 extends in the second direction 7 and is rotatably connected to the rotating shaft 232. Specifically, a shaft hole 127 extending in the second direction 7 is formed in the connecting part 211; a bearing is mounted in the shaft hole 127; and the rotating shaft 232 is located in the shaft hole 127 and connected to the bearing, so as to prevent an inner wall of the connecting part 211 from being worn by the rotating shaft 232 in a process.

The hood body 2120 is connected to the connecting part 211 and extends in the first direction 6. A driving piece 230 configured to drive the wheel 222 to rotate is mounted in the hood body 2120. An inner end of the hood body 2120 in the first direction 6 is connected to the connecting part 211. An outer end of the hood body extends to an edge of the vehicle body 1 in the first direction 6. The wheel 222 is located at the outer end of the hood body 2120. In addition, a wire hole 216 is also formed in an inner end surface of the hood body 2120 in the first direction 6; and the wire hole 216 is configured to mount a circuit for the driving piece 230.

The baffle 213 is connected to a bottom of the hood body 2120 and extends in a circumferential direction of the hood body 2120, that is, extends in a circumferential direction of the wheel 222. The hood body 2120 is cylindrical. The baffle 213 is an arc-shaped plate extending in the circumferential direction of the hood body 2120 and is located outside the seat body 121, that is, the baffle 213 is closer to an exterior of the vehicle body 1 in the first direction 6 than the seat body 121 and is spaced apart from an outer end of the seat body 121 in the first direction 6, so that grass cuttings can be prevented from entering the seat body 121, provided that a shape of the baffle 213 is matched with a bottom shape of an outer end wall of the seat body 121 in the first direction 6, that is, the grass cuttings can be placed into an internal interface from the outer end of the seat body 121 in the first direction 6. A specific shape of the baffle 213 is not limited.

A range of an outer end distance between the baffle 213 and seat body 121 is 0.5 mm to 1.5 mm preferably. Optionally, the range includes, but is not limited to 0.5 mm, 0.6 mm, 0.7 mm, 0.8 mm, 0.9 mm, 1.0 mm, 1.1 mm, 1.2 mm, 1.3 mm, 1.4 mm, and 1.5 mm. This range can not only prevent grass cuttings from entering the seat body 121, but also prevent the connector 21 from touching the seat body 121 in a rotation process, which hinders rotation of the connector 21.

When the connector 21 is at the first position, a height range by which a bottom end of the baffle 213 exceeds a bottom surface of the limiting plate 123 is 0 mm to 2 mm, that is, a bottom surface of the baffle 213 may be flush with the bottom surface of the limiting plate 123 or slightly exceed the bottom surface of the limiting plate 123. When the connector 21 is at the second position, the baffle 213 moves downwards along with the connector 21, but does not touch the seat body 121.

An accommodating cavity 126 is also formed in a top surface of the limiting plate 123. The accommodating cavity 126 is close to an outer end of the limiting plate 123. A buffer 125 is mounted in the accommodating groove. The buffer 125 has elasticity and may be made of rubber or a silica gel material. The accommodating groove 126 is formed by a circular frame protruding from the top surface of the limiting plate 123. The circular frame is connected to the top surface of the limiting plate 123. The buffer 125 is mounted in the ring frame, so that the buffer 125 is closer to the hood body 2120, which helps the buffer provide a sufficient buffer force for the hood body 2120. When the connector 21 is at the first position, the connector 21 and the buffer 125 are spaced apart. When the connector 21 is at the second position, a bottom of the connector abuts against the buffer 125. In a process in which the connector 21 rotates from the first position to the second position, the bottom thereof gradually gets in contact with the buffer 125. The buffer 125 can buffer movement of the connector 21 and reduce vibration of the vehicle body 1.

The autonomous operation device 100 further includes a sensor and an inductive element for sensing a position of the moving mechanism 2, wherein one of the sensor and the inductive element is connected to the connector 21, and the other one is connected to the vehicle body 1. A distance between the sensor and the inductive element at the first position is different from that at the second position. The sensor can determine a position of the moving mechanism 2 relative to the vehicle body 1 based on the distance from the inductive element.

After the vehicle body 1 is lifted up, the moving mechanism 2 can rotate from the first position to the second position relative to the vehicle body 1 through the rotating shaft 232 under the action of dead weight. The sensor can sense a change of the distance from the inductive element, thereby determining that the vehicle body 1 is in a lifted state, so that the cutter head assembly is controlled by the control module to stop cutting to prevent an operator or a surrounding object from being cut.

In the embodiment shown in FIG. 43a to FIG. 44b, the inductive element is a magnet; and the sensor is a Hall sensor. An avoiding groove is formed in the bottom surface of the chassis 10. The Hall sensor is mounted on an inner wall of the avoiding groove. A mounting protrusion 214 for mounting the magnet is formed on a top surface of the hood body 2120. A mounting groove 215 is formed in a side surface of the mounting protrusion 214 in the second direction 7 or the first direction 6. The magnet is located in the mounting groove 215. When the connector 21 is at the first position, the mounting protrusion 214 is located in the avoiding groove, and an opening of the mounting groove 215 is arranged opposite the Hall sensor, that is, the magnet and the Hall sensor are arranged opposite each other in the horizontal direction. When the connector 21 is at the second position, the magnet moves downwards along with the connector 21 and gets away from the Hall sensor. The Hall sensor can sense a change of a magnetic field of the magnet, thereby sensing a position of the moving mechanism 2 relative to the vehicle body 1.

Preferably, a shaft hole 127 for mounting the rotating shaft 232 and an arc-shaped protrusion 1221 located below the shaft hole 127 are formed on each of opposite side surfaces of the two connection plates 122, respectively. The arc-shaped protrusion 1221 is an arc extending around the rotating shaft 232 and is located below the rotating shaft 232. Two ends of the connecting part 211 in the second direction 7 respectively protrude from two sides of the hood body 2120 in the second direction 7 and are located in the two arc-shaped protrusions 1221.

During mounting of the moving mechanism 2 and the mounting seat 12, opposite shaft holes 127 of the connection plate 122 may be first aligned with the shaft hole 127 of the connecting part 211, respectively. The connecting part 211 is mounted in two opposite arc-shaped protrusions 1221 of the connector 21 along the two ends in the second direction 7. The arc-shaped protrusion 1221 can play a function of pre-positioning. Then, the rotating shaft 232 sequentially passes through the shaft hole 127 of one of the connection plates 122, the shaft hole 127 of the connecting part 211, and the shaft hole 127 of the other connection plate 122, thereby completing a connection between the moving mechanism 2 and the mounting seat 12. Finally, the mounting seat 12 is fixedly connected to the chassis 10 through a screw.

An accommodating cavity is formed in a top surface of the chassis 10. At least a part of the vision module is arranged in the accommodating cavity, and the other part thereof may protrude out of a top surface of the vehicle body 1 and be configured to collect image information.

The autonomous operation device 100 further includes a heat dissipation piece 50 and a circuit board assembly. The circuit board assembly is located in the accommodating cavity and connected to the vision module. In addition, the circuit board assembly has a chip electrically connected to the vision module. The chip is configured to perform image processing. The heat dissipation piece 50 is connected to the chassis 10. At least a part of the heat dissipation piece 50 is arranged around a periphery of the seat body 121 of the mounting seat 12, and at least another part thereof is arranged opposite the circuit board assembly.

Because the chip has a relatively high computing speed and a relatively large computing amount, a relatively large amount of heat is generated in a working process. Because the chip is arranged in the sealed accommodating cavity on the top surface of the chassis 10, at least a part of the heat dissipation piece 50 and the chip are arranged opposite each other in the vertical direction, thereby dissipating heat of the chip. In addition, at least a part of the heat dissipation piece 50 is arranged around the periphery of the seat body 121, and can dissipate heat of the driving piece 230 in the seat body 121.

The heat dissipation piece 50 may use a cold plate heat-dissipating manner or a ventilation heat-dissipating manner. A specific embodiment of the heat dissipation piece 50 is not limited.

In the embodiment shown in FIG. 43a to FIG. 44b, the heat dissipation piece includes a main body section, a fixing section and a plurality of heat dissipation fins, where at least a part of the main body section protrudes towards a side where the circuit board assembly is located and is arranged opposite the chip of the circuit board assembly. The fixing section is located at a periphery of the main body section and embedded into the main body section, or a part of the main body section is embedded into the fixing section to be fixedly connected to the chassis 10. For details, refer to Chinese Patent Application CN2023210423238.

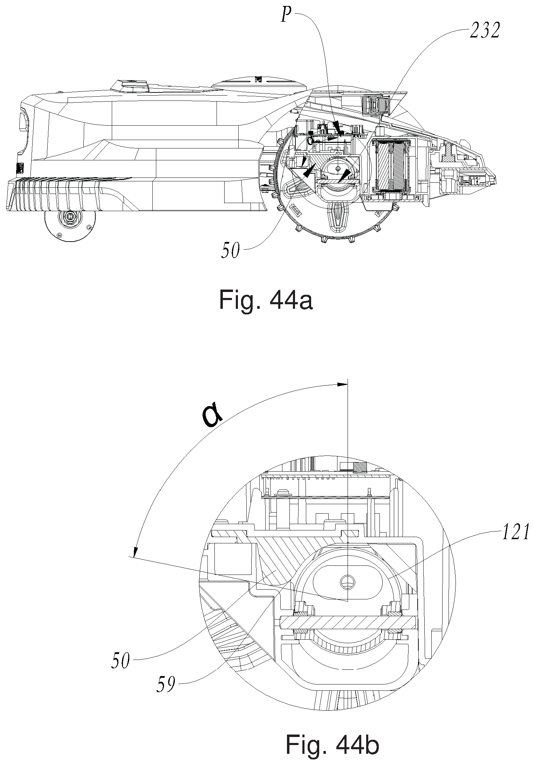

The plurality of heat dissipation fins are spaced apart in the first direction 6 and arranged around the periphery of the seat body 121. Specifically, side surfaces, opposite the seat body 121, of the plurality of heat dissipation fins are concave parts that are recessed inwards. An opening of the concave part faces a top surface of the heat dissipation piece 50. A part of the seat body 121 is located in the concave part. An inner wall of the concave part is arranged around a periphery of a part of the seat body 121. A part of a top of the seat body 121 is located in the concave part. A bottom of the seat body protrudes from the bottom surface of the heat dissipation piece 50. It can be learned from the embodiment shown in FIG. 44b that the inner wall of the concave part extends around a side surface of the seat body 121 in the second direction 7 to the top surface of the seat body 121 and is spaced apart from the seat body 121. It should be understood that in another embodiment, the plurality of heat dissipation fins may be arranged around a periphery of a bottom or a lateral of the seat body 121, provided that heat dissipation of the driving piece 230 can also be taken into account.

The inner wall of the concave part is an arc surface 59 surrounding the periphery of the seat body 121 in a fitted manner. A radian of the arc surface 59 substantially fits the periphery of the seat body 121, that is, the arc surface 59 of the concave part is formed by side surfaces, opposite the seat body 121, of the plurality of heat dissipation fins. Preferably, two ends of the arc surface 59 in the circumferential direction form an angle α with an axis of the wheel 222. A range of α is greater than or equal to 60°. More preferably, the range of α is greater than or equal to 75°.

The mounting seat 12 is symmetrically arranged relative to a central axis of the vehicle body 1 in the second direction 7. The connector 124 is located in a middle of the seat body 121. One end of the connector is connected to a side surface of the seat body 121, and the other end thereof spans a middle part of the heat dissipation piece 50 and is connected to the chassis 10 through a screw. Both the hood body 2120 and the connector 124 are axisymmetric shapes. The two moving mechanisms 2 are also arranged symmetrically relative to the central axis of the vehicle body 1 in the second direction 7 and are each rotatably connected to the mounting seat 12.

The heat dissipation piece 50 is also arranged symmetrically relative to the central axis of the vehicle body 1 in the second direction 7. A length of the heat dissipation piece 50 in the first direction 6 is smaller than a length of the mounting seat 12 in the first direction 6. Preferably, a range of a ratio of the length of the heat dissipation piece 50 in the first direction 6 to the length of the mounting seat 12 in the first direction 6 is greater than or equal to 60%; and optionally, the ratio of the length of the heat dissipation piece 50 in the first direction 6 to the length of the mounting seat 12 in the first direction 6 includes but is not limited to 60%, 70%, 80%, 90%, or 100%. The ratio of the length of the heat dissipation piece 50 in the first direction 6 to the length of the mounting seat 12 in the first direction 6 is greater than or equal to 80%.

In the present disclosure, the heat dissipation piece 50 of the chip is also configured to dissipate heat of the driving piece 230 of the driving motor, without installing an additional heat dissipation system, which can not only save space and but also reduce manufacturing costs.

The preferred embodiments of the present disclosure have been described in detail above. However, it should be understood that an aspect of the embodiments can be modified, if necessary, to employ aspects, features and concepts of the various patents, applications and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

Those of ordinary skill in the art can understand that the various embodiments mentioned above represent specific embodiments to realize the present disclosure. In practical applications, various alterations can be made in form and detail without departing from the spirit and scope of the present disclosure.

## Claims

1. An intelligent lawn mower, **characterized in that** the intelligent lawn mower comprises a vehicle body (1), a moving mechanism (2), and a work piece,
the moving mechanism (2) is connected to the vehicle body (1) and comprises at least two driving wheels (271) and at least one auxiliary wheel (40),
the driving wheels (271) are arranged near a front end of the intelligent lawn mower, and the driving wheels (271) are configured to be driven by a prime mover or a driving piece (230) to rotate around a wheel axis,
the auxiliary wheel (40) is arranged near a rear end of the intelligent lawn mower, and the auxiliary wheel (40) is configured to be driven by a wheel hub motor to rotate around a horizontal axis, and to be driven by a steering motor (254) to rotate around a vertical axis,
the work piece comprises a cutting blade or a cutting cutterhead, and the work piece is arranged between the driving wheels (271) and the auxiliary wheel (40).

2. The intelligent lawn mower according to claim 1, **characterized in that** the intelligent lawn mower further comprises a seat body and a wheel fork, and the auxiliary wheel (40) is connected to the vehicle body (1) through the seat body and the wheel fork,
the seat body is mounted at a bottom of the vehicle body (1),
the wheel fork comprises a fork part and a rotating shaft, the rotating shaft extends in a vertical direction, a top end of the rotating shaft is rotatably connected to the seat body, and a bottom end of the rotating shaft is connected to the fork part; the rotating shaft is provided with a shaft cavity (311) extending in an axial direction, the shaft cavity (311) having a top opening and a bottom opening, and the shaft cavity (311) is configured to receive a middle portion of a wire.

3. The intelligent lawn mower according to claim 2, **characterized in that** the shaft cavity (311) comprises, from top to bottom in the axial direction, a first section (3120) and a second section (313) that are in communication with each other, and an inner diameter of the first section (3120) is smaller than an inner diameter of the second section(313);
the intelligent lawn mower further comprises a sealing plug (511), the sealing plug (511) is configured to be sleeved on an exterior of the wire, the sealing plug (511) is elastic and is located in the second section(313), and an outer diameter of the sealing plug (511) is larger than the diameter of the first section (3120).

4. The intelligent lawn mower according to claim 3, **characterized in that** a convex ring (552) is provided on a radial outer surface of the sealing plug (511), and the convex ring (552) extends in a circumferential direction of the sealing plug (511).

5. The intelligent lawn mower according to claim 2, **characterized in that** the seat body comprises a base (251) and a lid body (252) located on a top of the base (251), the base (251) is provided with an accommodating cavity (253), the accommodating cavity (253) extends from a bottom surface of the base (251) to a top surface of the lid body (252) in the vertical direction, the top and a middle portion of the rotating shaft are located in the accommodating cavity (253) and are rotatably connected to an inner wall of the accommodating cavity (253), and the bottom end of the rotating shaft extends beyond a bottom end of the seat body and is connected to the fork part.

6. The intelligent lawn mower according to claim 2, **characterized in that** the fork part is U-shaped and comprises a shoulder (321) and two arms (322), two ends of the shoulder (321) are respectively connected to top ends of the two arms (322), bottom ends of the two arms (322) are respectively in rollable connection with the auxiliary wheel (40), and the rotating shaft extends in the vertical direction and the bottom end of the rotating shaft is connected to a top surface of the shoulder (321).

7. The intelligent lawn mower according to claim 6, **characterized in that** the shoulder (321) of the wheel fork is further provided with a threading hole (323) and a plurality of positioning grooves (324), the threading hole (323) is formed by recessing an outer surface of the wheel fork and is in communication with the shaft cavity (311), and the plurality of positioning grooves (324) are located on two sides of the threading hole (323).

8. The intelligent lawn mower according to claim 7, **characterized in that** a bottom surface of the rotating shaft is further provided with an avoiding groove (314), the avoiding groove (314) extends radially from a radial outer surface of the rotating shaft to the shaft cavity (311), the avoiding groove (314) and the threading hole (323) are arranged corresponding to each other in the vertical direction and the avoiding groove (314) is located above the threading hole (323), and the avoiding groove (314) is configured to avoid the wire.

9. The intelligent lawn mower according to claim 1, **characterized in that** the moving mechanism (2) further comprises at least one wheel carrier (272), and the prime mover is arranged in the wheel carrier (272);
the wheel carrier (272) extends in a second direction parallel to a walking surface, the wheel carrier (272) is hinged to a lower part of the vehicle body (1), a hinge axis of the wheel carrier (272) and the vehicle body (1) extends in the second direction and is non-collinear with an axis of the wheel carrier (272), and the wheel carrier (272) is configured to operatively rotate around the hinge axis of the wheel carrier (272) and the vehicle body (1) away from or towards the lower part of the vehicle body (1).

10. The intelligent lawn mower according to claim 9, **characterized in that** a connecting lug (2721) is provided on a side wall of the wheel carrier (272), a supporting plate (16) is provided at the lower part of the vehicle body (1), the connecting lug(2721) is hinged to the supporting plate (16), a hinge axis of the connecting lug(2721) and the supporting plate (16) extends in the second direction and is non-collinear with the axis of the wheel carrier (272), and the connecting lug (2721) is configured to operatively rotate around the hinge axis of the connecting lug (2721) and the supporting plate (16) away from or towards the lower part of the vehicle body (1).

11. The intelligent lawn mower according to claim 10, **characterized in that** a limiting plate (178)extending in the second direction is further provided at the lower part of the vehicle body, the limiting plate (178) is configured to limit a rotation range of the wheel carrier (272), and when the wheel carrier (272) moves away from the vehicle body (1) to a preset position, the connecting lug (2721) abuts against the limiting plate (178).

12. The intelligent lawn mower according to claim 10, **characterized in that**
the moving mechanism (2) comprises one said wheel carrier (272) and two said driving wheels (271), the two driving wheels (271) are respectively connected to two sides of the wheel carrier (272), the two sides of the wheel carrier (272) are respectively provided with one said connecting lug (2721), the lower part of the vehicle body (1) has two protruding said supporting plates (16), the two supporting plates (16) are spaced apart from each other, and one supporting plate (16) is correspondingly arranged and hinged to one connecting lug (2721); or
the moving mechanism (2) comprises two said wheel carriers (272), two said driving wheels (271), and a connector (274), one side of each of the two wheel carriers (272) is provided with one said connecting lug (2721), the two driving wheels (271) are respectively connected to sides of the wheel carriers (272) adjacent to the connecting lugs (2721), and the connector (274) connects the two wheel carriers (272) and is located on sides of the wheel carriers (272) away from the connecting lugs (2721).

13. The intelligent lawn mower according to claim 1, **characterized in that** the moving mechanism (2) further comprises a connector (21), and the driving piece (230) is arranged in the connector (21); an inner end of the connector (21) in a first direction (6) is rotatably connected to the vehicle body (1), the connector (21) is configured to rotate relative to the vehicle body (1) around an axis parallel to a second direction (7) between a first position and a second position, a height of an outer end of the connector (21) in the first direction (6) at the second position is lower than a height of the outer end at the first position, the second direction (7) is an advancing direction of the vehicle body (1) and is perpendicular to the first direction (6).

14. The intelligent lawn mower according to claim 13, **characterized in that** the vehicle body (1) comprises a chassis (10) and a mounting seat (12) connected to the chassis (10), and the connector (21) is connected to the chassis (10) through the mounting seat (12);
the mounting seat (12) comprises two connection plates (122) extending in the first direction (6) and a limiting plate (123), the two connection plates (122) are arranged opposite to each other in the second direction (7), the limiting plate (123) is connected to bottom ends of the two connection plates (122);
at the first position, a top of the connector (21) at least partially abuts against a bottom surface of the chassis (10); at the second position, the outer end of the connector (21) is away from the chassis (10) and a portion of the connector (21) between the inner end and the outer end abuts against an outer end of the limiting plate (123) in the first direction (6).

15. The intelligent lawn mower according to claim 14, **characterized in that** the connector (21) comprises a connecting part (211), a hood body (2120), and a baffle (213);
the connecting part (211) extends in the second direction (7) and is rotatably connected to the mounting seat (12) through a rotating shaft (232);
the hood body (2120) is connected to the connecting part (211), and the driving piece (230) is located in the hood body (2120);
the baffle (213) is connected to a bottom of the hood body (2120) and extends in a circumferential direction of the hood body (2120), the baffle (213) is spaced apart from an outer end of the mounting seat (12) in the first direction (6), at the first position, a bottom end of the baffle (213) extends to at least a bottom surface of the limiting plate (123), and at the second position, the baffle (213) moves downward with the connector (21) but does not contact the mounting seat (12).
